(19) **Europäisches Patentamt / European Patent Office / Office européen des brevets**

(11) **EP 4 769 231 A1**

(12) # EUROPEAN PATENT APPLICATION
published in accordance with Art. 153(4) EPC

(43) Date of publication:
**01.07.2026 Bulletin 2026/27**

(21) Application number: **23949386.9**

(22) Date of filing: **22.08.2023**

(51) International Patent Classification (IPC):
**G06N 3/08** (2023.01)

(52) Cooperative Patent Classification (CPC):
**G06N 3/08**

(86) International application number:
**PCT/CN2023/114303**

(87) International publication number:
**WO 2025/039193 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• XU, Chen
  **Shenzhen, Guangdong 518129 (CN)**
• ZHANG, Gongzheng
  **Shenzhen, Guangdong 518129 (CN)**
• WANG, Jian
  **Shenzhen, Guangdong 518129 (CN)**
• LI, Rong
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **NEURAL NETWORK TRAINING METHOD AND COMMUNICATION APPARATUS**

(57)    This application provides a neural network training method and a communication apparatus. The method may include: A first device sends a first signal; a second device determines a second signal and an intermediate gradient, and sends the second signal and the intermediate gradient to the first device, where the second signal is correlated with the first signal; and the first device receives the intermediate gradient and the second signal, corrects the intermediate gradient based on the first signal and the second signal, and further updates a neural network parameter based on a corrected intermediate gradient. In this way, training of a neural network can be more efficient, and the training of the neural network can also be implemented by using the method in this application even in a communication scenario in which channel reciprocity is poor.

FIG. 4

**Description**

**TECHNICAL FIELD**

This application relates to the field of communication technologies, and more specifically, to a neural network training method and a communication apparatus.

**BACKGROUND**

An increasingly mature artificial intelligence (artificial intelligence, AI) technology will play an important role in promoting evolution of a future mobile communication network technology. Currently, there is extensive research on applying the AI technology to a network layer (for example, network optimization, mobility management, and resource allocation), a physical layer (for example, channel encoding and decoding, channel prediction, and a receiver), and other aspects.

With the advent of the foundation model era, some AI models can complete increasingly complex tasks and achieve good performance. However, training or inference of a foundation model with massive parameters needs to occupy a large quantity of computing power resources. It is difficult for a common communication device (for example, a terminal) to undertake training or inference of such a model. Therefore, for wireless communication, how to provide a plurality of support capabilities for the AI model to make training or inference of the AI model more efficient is a problem that needs to be concerned.

**SUMMARY**

This application provides a neural network training method and a communication apparatus, so that training of a neural network is more efficient, and this application is applicable to more communication scenarios.

According to a first aspect, a neural network training method is provided. The method may be performed by an apparatus. The apparatus may be a device (for example, a terminal device, a network device, or an AI node), or may be a component (for example, a chip or a circuit) of the device. This is not limited in this application.

The method may include: sending a first signal; receiving a first intermediate gradient and a second signal, where the second signal is correlated with the first signal; and updating the first intermediate gradient based on the first signal and the second signal, to obtain a second intermediate gradient, where the second intermediate gradient is used to update a neural network parameter.

Based on the foregoing technical solution, a device may determine a channel reciprocity error based on the signal (namely, the first signal) sent by the device, the received signal (namely, the second signal), and the relationship between the two signals, may further update the received intermediate gradient (namely, the first intermediate gradient) based on the channel reciprocity error, and then update the neural network parameter based on an updated intermediate gradient (namely, the second intermediate gradient). In this manner, a gradient error caused by channel reciprocity can be overcome, so that training of a neural network is more efficient. In addition, for a scenario in which channel reciprocity is poor, the technical solution may also be used to implement the training of the neural network. Therefore, the foregoing technical solution is applicable to more scenarios.

With reference to the first aspect, in some implementations of the first aspect, the first signal is any one of the following: a user-defined sequence, a reference signal, or a data signal.

The user-defined sequence may be, for example, a pseudo-random sequence. The user-defined sequence may also be referred to as a preset sequence or a sequence.

With reference to the first aspect, in some implementations of the first aspect, the first signal is the reference signal, and the first intermediate gradient is determined based on the first signal.

Based on the foregoing technical solution, if the first signal is the reference signal, after receiving the reference signal, a peer device may determine the intermediate gradient based on the reference signal. For example, the peer device may perform channel estimation based on the reference signal, and then may first compensate for or correct the intermediate gradient based on a channel estimation result, and then send the intermediate gradient.

With reference to the first aspect, in some implementations of the first aspect, the first intermediate gradient is determined based on the first signal and/or the data signal.

For example, the first intermediate gradient is determined based on the first signal. For example, when the first signal is the data signal, the first intermediate gradient is determined based on the first signal.

For another example, the first intermediate gradient is determined based on the data signal. For example, when the first signal is the data signal or the user-defined sequence, the first intermediate gradient is determined based on the data signal.

For another example, the first intermediate gradient is determined based on the first signal and the data signal.

For example, when the first signal is the reference signal, the first intermediate gradient is determined based on the first signal and the data signal.

With reference to the first aspect, in some implementations of the first aspect, updating the first intermediate gradient based on the first signal and the second signal includes: determining a channel reciprocity error value based on the first signal and the second signal; and updating the first intermediate gradient based on the channel reciprocity error value.

Based on the foregoing technical solution, the channel reciprocity error value is determined, and the intermediate gradient is corrected based on the error value, so that the gradient error caused by the channel reciprocity can be overcome.

With reference to the first aspect, in some implementations of the first aspect, the method further includes: sending first indication information, where the first indication information indicates a type of the first signal and/or a type of the second signal.

Based on the foregoing technical solution, considering that there may be a plurality of types of first signals and second signals, for example, there are different types of first signals and second signals in different scenarios, the type of the first signal and/or the type of the second signal may be indicated to the peer device. In this way, the peer device learns of the types of the first signal and the second signal, and further accurately receives the first signal and sends the second signal.

With reference to the first aspect, in some implementations of the first aspect, before receiving the first intermediate gradient and the second signal, the method further includes: receiving second indication information, where the second indication information indicates a pattern of the second signal.

Based on the foregoing technical solution, the peer device may provide the pattern of the second signal, so that the device accurately receives the second signal based on the pattern of the second signal.

With reference to the first aspect, in some implementations of the first aspect, the pattern of the second signal includes at least one of the following: a mask of the second signal, a resource occupied by the second signal, and a sequence number of the second signal.

Based on the foregoing technical solution, the peer device may indicate the pattern of the second signal by sending at least one of the foregoing information.

According to a second aspect, a neural network training method is provided. The method may be performed by an apparatus. The apparatus may be a device (for example, a terminal device, a network device, or an AI node), or may be a component (for example, a chip or a circuit) of the device. This is not limited in this application.

The method may include: receiving a first signal; and sending a first intermediate gradient and a second signal, where the second signal is correlated with the first signal, the second signal is used to update the first intermediate gradient, and the first intermediate gradient is used to update a neural network parameter.

With reference to the second aspect, in some implementations of the second aspect, the first signal is any one of the following: a user-defined sequence, a reference signal, or a data signal.

With reference to the second aspect, in some implementations of the second aspect, the first intermediate gradient is determined based on the first signal and/or the data signal.

For example, the first intermediate gradient is determined based on the first signal. For example, when the first signal is the data signal, the first intermediate gradient is determined based on the first signal.

For another example, the first intermediate gradient is determined based on the data signal. For example, when the first signal is the data signal or the user-defined sequence, the first intermediate gradient is determined based on the data signal.

For another example, the first intermediate gradient is determined based on the first signal and the data signal. For example, when the first signal is the reference signal, the first intermediate gradient is determined based on the first signal and the data signal.

For example, the first intermediate gradient is determined based on the data signal; channel estimation is performed based on the first signal, and the first intermediate gradient is updated based on a channel estimation result; and that the first intermediate gradient is sent includes that an updated first intermediate gradient is sent.

With reference to the second aspect, in some implementations of the second aspect, the method further includes: receiving first indication information, where the first indication information indicates a type of the first signal and/or a type of the second signal.

With reference to the second aspect, in some implementations of the second aspect, the method further includes: sending second indication information, where the second indication information indicates a pattern of the second signal.

With reference to the second aspect, in some implementations of the second aspect, the pattern of the second signal includes at least one of the following: a mask of the second signal, a resource occupied by the second signal, and a sequence number of the second signal.

For beneficial effect of the second aspect and the possible designs, refer to related descriptions of the first aspect. Details are not described herein again.

With reference to the first aspect or the second aspect, in some implementations, the second signal and the first signal satisfy:

$$A2 = f\left(A1\right) \;\; \text{or} \;\; A2 = f\left(A1^{*}\right),$$

where

*A*1 indicates the first signal, *A*2 indicates the second signal, and *A*1* indicates a conjugate operation on *A*1.

For example, the relationship may be predefined, preconfigured, or indicated.

Based on the foregoing technical solution, the first signal and the second signal may satisfy the relationship. In this way, the peer device may determine the second signal based on the relationship.

With reference to the first aspect or the second aspect, in some implementations, the second signal and the first signal satisfy any one of the following:

$$A2 = \alpha A1, \;\; A2 = \alpha A1^{*}, \;\; A2 = \frac{1}{|A1|}A1, \;\; A2 = \frac{1}{|A1|}A1^{*}, \;\; A2 = \frac{1}{\|A1\|_{2}}A1, \;\text{or}\; A2 = \frac{1}{\|A1\|_{2}}A1^{*},$$

where

*A*1 indicates the first signal, *A*2 indicates the second signal, *A*1* indicates the conjugate operation on *A*1, |*A*1| indicates independent normalization processing on power of each symbol in *A*1, $\|A1\|_{2}$ indicates normalization processing on power of a part or all of symbols in *A*1, and $\alpha$ is a constant.

For example, the relationship may be predefined, preconfigured, or indicated.

According to a third aspect, a neural network training method is provided. The method may be performed by an apparatus. The apparatus may be a device (for example, a terminal device, a network device, or an AI node), or may be a component (for example, a chip or a circuit) of the device. This is not limited in this application.

The method may include: sending a first reference signal; receiving a first intermediate gradient and a second reference signal, where the first intermediate gradient is determined based on the first reference signal; and performing channel estimation based on the second reference signal, and updating the first intermediate gradient based on a channel estimation result, to obtain a second intermediate gradient, where the second intermediate gradient is used to update a neural network parameter.

Based on the foregoing technical solution, a peer device may perform channel estimation based on the reference signal sent by the device, further determine the intermediate gradient based on the channel estimation result, and send the intermediate gradient to the device. The device may perform channel estimation based on the reference signal sent by the peer device, and further update the received intermediate gradient based on the channel estimation result. In this way, a channel reciprocity error is considered for the intermediate gradient, so that a gradient error caused by channel reciprocity can be overcome.

With reference to the third aspect, in some implementations of the third aspect, the method further includes: sending first indication information, where the first indication information indicates a type of the first reference signal and/or a type of the second reference signal.

With reference to the third aspect, in some implementations of the third aspect, before receiving the first intermediate gradient and the second reference signal, the method further includes: receiving second indication information, where the second indication information indicates a pattern of the second reference signal.

With reference to the third aspect, in some implementations of the third aspect, the pattern of the second reference signal includes at least one of the following: a mask of the second reference signal, a resource occupied by the second reference signal, and a sequence number of the second reference signal.

According to a fourth aspect, a neural network training method is provided. The method may be performed by an apparatus. The apparatus may be a device (for example, a terminal device, a network device, or an AI node), or may be a component (for example, a chip or a circuit) of the device. This is not limited in this application.

The method may include: receiving a first reference signal; performing channel estimation based on the first reference signal, and determining a first intermediate gradient based on a channel estimation result; and sending the first intermediate gradient and a second reference signal, where the second reference signal is used to update the first intermediate gradient, and the first intermediate gradient is used to update a neural network parameter.

With reference to the fourth aspect, in some implementations of the fourth aspect, the method further includes: receiving first indication information, where the first indication information indicates a type of the first reference signal and/or a type of the second reference signal.

With reference to the fourth aspect, in some implementations of the fourth aspect, the method further includes: sending second indication information, where the second indication information indicates a pattern of the second reference signal.

With reference to the fourth aspect, in some implementations of the fourth aspect, the pattern of the second reference signal includes at least one of the following: a mask of the second reference signal, a resource occupied by the second reference signal, and a sequence number of the second reference signal.

For beneficial effect of the fourth aspect and the possible designs, refer to related descriptions of the third aspect. Details are not described herein again.

According to a fifth aspect, a neural network training method is provided. The method may be performed by an apparatus. The apparatus may be a device (for example, a terminal device, a network device, or an AI node), or may be a component (for example, a chip or a circuit) of the device. This is not limited in this application.

The method may include: obtaining a channel reciprocity error; receiving a first intermediate gradient; and updating the first intermediate gradient based on the channel reciprocity error, to obtain a second intermediate gradient, where the second intermediate gradient is used to update a neural network parameter.

Based on the foregoing technical solution, in a process of training a neural network, the channel reciprocity error is considered, so that a gradient error caused by channel reciprocity can be overcome, and training of the neural network is more efficient. In addition, for a scenario in which channel reciprocity is poor, the technical solution may also be used to implement the training of the neural network. Therefore, the foregoing technical solution is applicable to more scenarios.

With reference to the fifth aspect, in some implementations of the fifth aspect, the method further includes: sending a first signal; receiving a second signal, where the second signal is correlated with the first signal; and obtaining the channel reciprocity error includes: determining the channel reciprocity error based on the first signal and the second signal.

According to a sixth aspect, a communication apparatus is provided. The apparatus is configured to perform the method according to any one of the first aspect to the fifth aspect. Specifically, the apparatus may include units and/or modules, for example, a processing unit and/or a communication unit, configured to perform the method according to any implementation of any one of the first aspect to the fifth aspect.

In an implementation, the apparatus is a communication device. When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is a chip, a chip system, or a circuit used in a device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes: a memory, configured to store a program; and at least one processor, configured to execute a computer program or instructions stored in the memory, to perform the method according to any implementation of any one of the first aspect to the fifth aspect.

In an implementation, the apparatus is a communication device.

In another implementation, the apparatus is a chip, a chip system, or a circuit used in the communication device.

According to an eighth aspect, this application provides a processor, configured to perform the methods according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code to be executed by a device, and the program code is used to perform the method according to any implementation of any one of the first aspect to the fifth aspect.

According to a tenth aspect, a computer program product including instructions is provided. When the computer program product runs on a computer, the computer is enabled to perform the method according to any implementation of any one of the first aspect to the fifth aspect.

According to an eleventh aspect, a chip is provided. The chip includes a processor and a communication interface. The processor reads, through the communication interface, instructions stored in a memory, to perform the method according to any implementation of any one of the first aspect to the fifth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any implementation of any one of the first aspect to the fifth aspect.

According to a twelfth aspect, a communication system is provided, including a first communication apparatus and a second communication apparatus. The first communication apparatus is configured to perform the method according to any implementation of the first aspect, and the second communication apparatus is configured to perform the method according to any implementation of the second aspect. Alternatively, the first communication apparatus is configured to perform the method according to any implementation of the third aspect, and the second communication apparatus is configured to perform the method according to any implementation of the fourth aspect.

**BRIEF DESCRIPTION OF DRAWINGS**

FIG. 1 is a diagram of a wireless communication system to which embodiments of this application are applicable;
FIG. 2 is another diagram of a wireless communication system to which embodiments of this application are applicable;
FIG. 3 is a diagram of a structure of a neuron;
FIG. 4 is a diagram of a neural network training method 400 according to an embodiment of this application;
FIG. 5 is a schematic flowchart of a method 500 according to an embodiment of this application;
FIG. 6 is a diagram of signal sending and feedback applicable to the method 500 according to an embodiment of this application;
FIG. 7 is a schematic flowchart of a method 700 according to another embodiment of this application;
FIG. 8 is a diagram of signal sending and feedback applicable to the method 700 according to an embodiment of this application;
FIG. 9 is a schematic flowchart of a method 900 according to still another embodiment of this application;
FIG. 10 is a diagram of signal sending and feedback applicable to the method 900 according to an embodiment of this application;
FIG. 11 is a diagram of a neural network training method 1100 according to an embodiment of this application;
FIG. 12 is a schematic flowchart of a method 1200 according to yet another embodiment of this application;
FIG. 13 is a diagram of signal sending and feedback applicable to the method 1200 according to an embodiment of this application;
FIG. 14 is a diagram of a decrease of a loss function in a case in which solutions in embodiments of this application are used;
FIG. 15 is a diagram of signal processing to which embodiments of this application are applicable;
FIG. 16 is a block diagram of a communication apparatus 1600 according to an embodiment of this application;
FIG. 17 is a diagram of another communication apparatus 1700 according to an embodiment of this application; and
FIG. 18 is a diagram of a chip system 1800 according to an embodiment of this application.

**DESCRIPTION OF EMBODIMENTS**

The following describes technical solutions in this application with reference to accompanying drawings.

First, a communication system to which this application is applicable is briefly described.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device.

A terminal device in embodiments of this application includes various devices having a wireless communication function, and the terminal device may be configured to be connected to a person, an object, a machine, and the like. The terminal device may be widely used in various scenarios such as cellular communication, D2D, V2X, peer-to-peer (pee-to-peer, P2P), M2M, MTC, IoT, virtual reality (virtual reality, VR), augmented reality (augmented reality, AR), industrial control, autonomous driving, telemedicine, a smart grid, smart furniture, smart office, a smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; may be an apparatus built in the foregoing device (for example, a communication module, a modem, or a chip in the foregoing device), or may be another processing device connected to the wireless modem. For ease of description, an example in which the terminal device is a terminal or UE is used below for description.

It should be understood that, in some scenarios, the UE may be further used as a base station. For example, the UE may act as a scheduling entity that provides a sidelink signal between UEs in a scenario like V2X, D2D, or P2P.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that takes on a base station function in D2D, V2X, or M2M communication, a network-side device in a 6G network, a device that takes on a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured to serve as a mobile base station, and at least one cell may move based on a location of the mobile base station. In another example, a helicopter or an uncrewed aerial vehicle may be configured as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces correspond to DUs and RUs with different functions respectively. If a fronthaul interface between the DU and the RU is a common public radio interface (common public radio interface, CPRI), the DU is configured to implement one or more of baseband functions, and the RU is configured to implement one or more of radio frequency functions. If the fronthaul interface between the DU and the RU is an enhanced common public radio interface (enhanced common public radio interface, eCPRI), different from implementation of the CPRI, a part of downlink baseband functions and/or uplink baseband functions are migrated from the DU to the RU for implementation. Different manners of splitting the DU and the RU correspond to different categories (category, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement demapping and one or more functions before the demapping (to be specific, one or more of decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP and the CU-UP), the DU, and the RU in this application may be implemented by using a software module, a hardware module, or a combination of the software module and the hardware module.

In embodiments of this application, an apparatus configured to implement a function of the network device may be the network device, or may be an apparatus that can support the network device in implementing the function, for example, a chip system or a chip. The apparatus may be installed in the network device. In embodiments of this application, the chip system may include a chip, or may include a chip and another discrete component. In embodiments of this application, an example in which the apparatus for implementing the function of the network device is the network device is merely used for description, and constitutes no limitation on the solutions in embodiments of this application.

The network device and the terminal device may be deployed on land, including an indoor or outdoor device, a handheld device, or a vehicle-mounted device; or may be deployed on a water surface; or may be deployed on an airplane, a balloon, or a satellite in air. A scenario in which the network device and the terminal device are located is not limited in embodiments of this application. In addition, the terminal device and the network device may be hardware devices; or may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In addition, to support an AI technology in the wireless network, an AI node may be further introduced into the network.

Optionally, the AI node may be deployed in one or more of the following positions in the communication system: an access network device, a terminal device, a core network device, or the like. Alternatively, the AI node may be independently deployed, for example, deployed in a position other than any one of the foregoing devices, for example, a host or a cloud server in an over the top (over the top, OTT) system. The AI node may communicate with other devices in the communication system. The other devices may be, for example, one or more of the following: a network device, a terminal device, a network element of a core network, or the like.

It may be understood that a quantity of AI nodes is not limited in this application. For example, when there are a plurality of AI nodes, the plurality of AI nodes may be obtained through division based on functions. For example, different AI nodes are responsible for different functions.

It may be further understood that the AI nodes may be independent devices, or may be integrated into a same device to implement different functions, or may be network elements in a hardware device, or may be software functions running on dedicated hardware, or may be virtualized functions instantiated on a platform (for example, a cloud platform). A specific form of the AI node is not limited in this application.

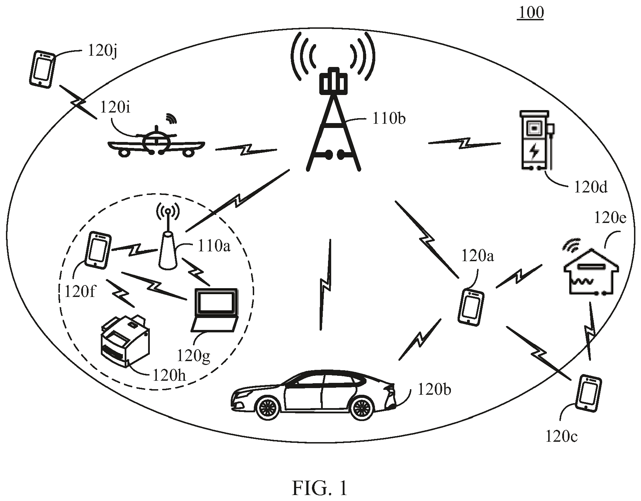

FIG. 1 is a diagram of a wireless communication system to which embodiments of this application are applicable.

As shown in FIG. 1, the wireless communication system includes a radio access network 100. The radio access network 100 may be a next generation (for example, 6G or a later version) radio access network, or a conventional (for example, 5G, 4G, 3G, or 2G) radio access network. One or more terminal devices (120a to 120j, which are collectively referred to as 120) may be interconnected or connected to one or more network devices (110a and 110b, which are collectively referred to as 110) in the radio access network 100. Network elements in the wireless communication system are connected through an interface (for example, NG or Xn) or an air interface. In addition, one or more AI modules may be disposed in each network element in the wireless communication system. AI modules deployed in different network elements may be the same or different.

FIG. 1 is only a diagram. The wireless communication system may further include another device, for example, may further include a core network device, a wireless relay device, and/or a wireless backhaul device, which are not shown in FIG. 1.

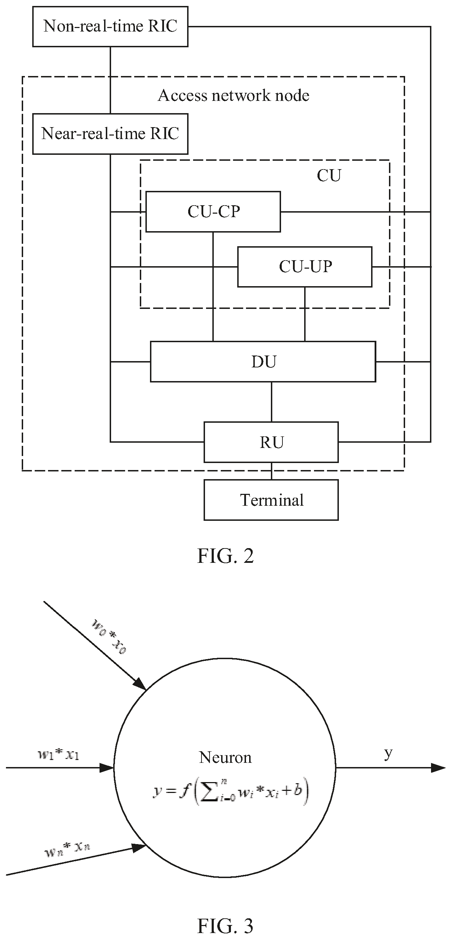

FIG. 2 is another diagram of a wireless communication system to which embodiments of this application are applicable.

As shown in FIG. 2, the wireless communication system includes a RAN intelligent controller (RAN intelligent controller, RIC). For example, the RIC may be configured to implement AI-related functions. For example, the RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be seconds. The real-time RIC mainly processes near-real-time information, for example, latency-sensitive data. A latency of the data is tens of milliseconds.

The near-real-time RIC is configured to perform model training and inference, for example, configured to train an AI model and perform inference by using the AI model. The near-real-time RIC may obtain network-side information and/or terminal-side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be transmitted between the CU and the DU and/or between the DU and the RU. For example, the near-real-time RIC delivers the inference result to the DU, and the DU sends the inference result to the RU.

The non-real-time RIC is also configured to perform model training and inference, for example, configured to train an AI model and perform inference by using the model. The non-real-time RIC may obtain network-side information and/or terminal-side information from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the CU and the DU may exchange an inference result, and/or the DU and the RU may exchange an inference result. For example, the non-real-time RIC delivers an inference result to the DU, and the DU sends the inference result to the RU.

The near-real-time RIC or the non-real-time RIC each may alternatively be independently deployed as a network element. Optionally, the near-real-time RIC or the non-real-time RIC may alternatively be used as a part of another device. For example, the near-real-time RIC is deployed in a RAN node (for example, a CU or a DU), while the non-real-time RIC is deployed in an OAM, a cloud server, a core network device, or another network device.

In actual application, the wireless communication system may include a plurality of network devices (also referred to as access network devices), and may include a plurality of terminal devices. This is not limited. One network device may simultaneously serve one or more terminal devices. One terminal device may also simultaneously access one or more network devices. Quantities of terminal devices and network devices included in the wireless communication system are not limited in embodiments of this application.

To facilitate understanding of embodiments of this application, the following briefly describes related concepts and technologies in this application.

1. Artificial intelligence: enables machines to learn and accumulate experience, to resolve problems such as natural language understanding, image recognition, and chess playing that can be resolved by humans through experience. The artificial intelligence may be understood as intelligence represented by machines manufactured by people. Usually, the artificial intelligence is a technology that presents human intelligence by using a computer program. An objective of the artificial intelligence includes understanding intelligence by building symbolic reasoning or computer programs for reasoning.

2. Machine learning (machine learning): is an implementation of artificial intelligence. The machine learning is a method that provides learning capabilities for machines to complete functions that cannot be implemented through direct programming. In practice, the machine learning is a method for training a model by using data and then performing prediction by using the model. There are many machine learning methods, such as a neural network (neural network, NN), a decision tree, and a support vector machine. A machine learning theory is mainly to design and analyze some algorithms that enable computers to learn automatically. A machine learning algorithm is an algorithm that automatically analyzes data to obtain a rule and uses the rule to predict unknown data.

3. Neural network: is a specific embodiment of a machine learning method. The neural network is a mathematical model that imitates animal neural network behavior features for information processing. An idea of the neural network is from a neuron structure of brain tissue. Each neuron may perform a weighted summation operation on input values of the neuron, and outputs, through an activation function, a result obtained through the weighted summation operation.

FIG. 3 is a diagram of a structure of a neuron. As shown in FIG. 3, it is assumed that inputs of the neuron are $x = [x_0, x_1, ..., x_n]$, weights corresponding to the inputs are respectively $w = [w, w_1, ..., w_n]$, and an offset of weighted summation is b. b may be an integer, may be a decimal, or may be various possible values such as a complex number. A form of the activation function may be diversified. For example, it is assumed that an activation function of a neuron is y = f(z) = max(0, z). In this case, an output of the neuron is $y = f\left(\sum_{i=0}^{i=n} w_i * x_i + b\right) = \max(0, \sum_{i=0}^{i=n} w_i * x_i + b)$. In another example, it is assumed that an activation function of a neuron is y=f(z)=z. In this case, an output of the neuron is $y = f\left(\sum_{i=0}^{i=n} w_i * x_i + b\right) = \sum_{i=0}^{i=n} w_i * x_i + b$, as shown in FIG. 3. Activation functions of different neurons in the neural network may be the same or different.

The neural network usually includes a plurality of layers of structures, and each layer may include one or more logical determining units. The logical determining unit may be referred to as a neuron (neuron). An expression capability of the neural network may be improved by increasing a depth and/or a width of the neural network, to provide more powerful information extraction and abstraction modeling capabilities for a complex system. The depth of the neural network may be understood as a quantity of layers included in the neural network, and a quantity of neurons included in each layer may be referred to as a width of the layer. In a possible implementation, the neural network includes an input layer and an output layer. The input layer of the neural network processes a received input through a neuron, and then transfers a result to the output layer, and the output layer obtains an output result of the neural network. In another possible implementation, the neural network includes an input layer, a hidden layer, and an output layer. The input layer of the neural network processes a received input through a neuron, and then transfers a result to the intermediate hidden layer. The hidden layer transfers a calculation result to the output layer or an adjacent hidden layer. Finally, the output layer obtains an output result of the neural network. One neural network may include one hidden layer or a plurality of sequentially connected hidden layers. This is not limited.

4. Loss function: used to measure a difference between a predicted value and an actual value of a model. In a process of training the neural network, the loss function describes a gap or a difference between an output value and an ideal target value of the neural network. The process of training the neural network is a process of adjusting a neural network parameter, so that a value of the loss function is less than a threshold or meets a target requirement. The neural network parameter may include at least one of the following: the quantity of layers of the neural network, the width of the neural network, a weight of a neuron, or a parameter in an activation function of the neuron.

5. Gradient: A training manner of the neural network may be evaluating an output result of the neural network by using a loss function, performing backpropagation on an error, and iterating a to-be-optimized parameter (namely, a neural network parameter) by using a gradient descent method until the loss function reaches a minimum value.

For example, a gradient descent process may be represented as: $\theta - \eta\frac{\partial L}{\partial \theta} \to \theta$. Herein, $\theta$ indicates the to-be-optimized parameter (for example, w and b in FIG. 3), L indicates the loss function, $\eta$ indicates learning efficiency, which can be used to control a gradient descent step, and $\partial$ indicates a partial derivative symbol.

As described above, the neural network usually includes a plurality of layers of structures. In a possible implementation, a gradient of a parameter of a previous layer may be recursively calculated based on a gradient of a parameter of a subsequent layer. A neuron i and a neuron j are used as examples. A gradient of a weight $w_{ij}$ between the neuron i and the neuron j may be represented as: $\frac{\partial L}{\partial w_{ij}} = \frac{\partial L}{\partial s_i}\frac{\partial s_i}{\partial w_{ij}}$. Herein, $s_i$ indicates an input weighted sum on the neuron i.

6. Intermediate gradient: is one or more items in a gradient expression of a neural network parameter, or a product of a plurality of items.

For example, it is assumed that a communication system includes a neural network #1, a neural network #2, and a neural network #3, and parameters corresponding to the neural networks are $\theta 1$, $\theta 2$, and $\theta 3$ respectively. Inputs of the neural network #1, the neural network #2, and the neural network #3 are Q1, Q2, and Q3 respectively. $Zi = \theta i \cdot Q(i\text{-}1), Q(i\text{-}1) = \sigma \cdot Z(i\text{-}1)$. Herein, Zi indicates an output of the neural network #i, where a value of i is 1, 2, or 3, and $\sigma$ indicates one or more functions used to process data.

A gradient of the parameter of the neural network #3 satisfies Formula 1.

$$\frac{\partial L}{\partial \theta 3} = \frac{\partial L}{\partial Q3}\frac{\partial Q3}{\partial Z3}\frac{\partial Z3}{\partial \theta 3}$$

Formula 1

A gradient of the parameter of the neural network #2 satisfies Formula 2.

$$\frac{\partial L}{\partial \theta 2} = \frac{\partial L}{\partial Q3}\frac{\partial Q3}{\partial Z3}\frac{\partial Z3}{\partial Q2}\frac{\partial Q2}{\partial Z2}\frac{\partial Z2}{\partial \theta 2}$$

Formula 2

A gradient of the parameter of the neural network #1 satisfies Formula 3.

$$\frac{\partial L}{\partial \theta 1} = \frac{\partial L}{\partial Q3}\frac{\partial Q3}{\partial Z3}\frac{\partial Z3}{\partial Q2}\frac{\partial Q2}{\partial Z2}\frac{\partial Z2}{\partial Q1}\frac{\partial Q1}{\partial Z2}\frac{\partial Z1}{\partial \theta 1}$$

Formula 3

Herein, L indicates the loss function. An intermediate gradient of the parameter of the neural network #3 is one or more items in Formula 1, or a product of a plurality of items. An intermediate gradient of the parameter of the neural network #2 is one or more items in Formula 2, or a product of a plurality of items. An intermediate gradient of the parameter of the neural network #1 is one or more items in Formula 3, or a product of a plurality of items. For example, the intermediate gradient of the parameter of the neural network #3 is $\frac{\partial L}{\partial Q3}\frac{\partial Q3}{\partial Z3}$. For another example, the intermediate gradient of the parameter of the neural network #3 is $\frac{\partial L}{\partial Q3}$ and $\frac{\partial Q3}{\partial Z3}$.

It should be understood that the intermediate gradient is merely a name for differentiation, and the name does not constitute a limitation on the protection scope of embodiments of this application.

7. AI model: is an algorithm or a computer program that can implement an AI function. The AI model represents a mapping relationship between an input and an output of the model, or the AI model is a function model that maps an input of a specific dimension to an output of a specific dimension. A parameter of the function model may be obtained through machine learning training. For example, $f(x)=ax^2+b$ is a quadratic function model, and may be considered as an AI model, where a and b are parameters of the AI model, and a and b may be obtained through machine learning training. For example, an AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

Design of the AI model mainly includes a data collection phase (for example, collection of training data and/or inference data), a model training phase, and a model inference phase, and may further include an inference result application phase. In the foregoing data collection phase, a data source (data source) is used to provide a training data set and inference data. In the model training phase, an AI model is obtained through analysis or training based on training data (training data) provided by the data source. Obtaining the AI model through learning by using a model training node is equivalent to obtaining a mapping relationship between input and output of the AI model through learning based on the training data. In the model inference phase, the AI model obtained through training in the model training phase is used to perform inference based on the inference data provided by the data source, to obtain an inference result. This phase may also be understood as inputting the inference data to the AI model and obtaining an output through the AI model, where the output is the inference result. The inference result may indicate a configuration parameter used (acted) by an execution object, and/or an operation performed by the execution object. The inference result is released in the inference result application phase. For example, the inference result may be centrally planned by an actor (actor) entity. For example, the actor entity may send the inference result to one or more actor objects (for example, a core network device, an access network device, or a terminal device) for execution. For another example, the actor entity may further feed back performance of the AI model to the data source, to facilitate subsequent update training of the AI model.

It may be understood that the AI model may be implemented by a hardware circuit, software, or a combination of software and hardware. This is not limited. A non-limitative example of the software includes program code, a program, a subprogram, instructions, an instruction set, code, a code segment, a software module, an application, a software application, or the like.

8. Model training: is a process of training a model parameter by selecting an appropriate loss function and using an optimization algorithm, so that a value of the loss function is less than a threshold, or the value of the loss function meets a target requirement.

9. Model application: is to resolve a practical problem by using a trained model.

The following describes in detail the method provided in embodiments of this application with reference to the accompanying drawings. Embodiments of this application provide two solutions, to improve model training efficiency and be applicable to more scenarios. In one solution, a device calculates a reciprocity error based on a signal sent by the device and a signal received from another device side, corrects an intermediate gradient, and updates a neural network parameter based on a corrected intermediate gradient. In this way, a gradient error caused by channel reciprocity can be overcome. In the other solution, two devices separately perform channel estimation based on reference signals, and correct an intermediate gradient. In this way, the gradient error caused by the channel reciprocity can also be overcome.

Embodiments provided in this application may be applied to the communication system shown in FIG. 1 or FIG. 2. This is not limited.

It should be noted that in this application, "indicate" may include direct indication, indirect indication, explicit indication, and implicit indication. When a piece of indication information indicates A, it may be understood as that the indication information carries A, directly indicates A, or indirectly indicates A.

In this application, information indicated by the indication information is referred to as to-be-indicated information. In a specific implementation process, the to-be-indicated information may be indicated in many manners, for example but not limited to the following manners: The to-be-indicated information may be directly indicated. For example, the to-be-indicated information, an index of the to-be-indicated information, or the like is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that is pre-agreed on (for example, specified in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

In the following embodiments, a first device and a second device are used as examples for description.

The first device may be a terminal device or a component (for example, a chip or a circuit) of the terminal device, or the first device may be a network device or a component (for example, a chip or a circuit) of the network device, or the first device may be an AI node or a component (for example, a chip or a circuit) of the AI node.

The second device may be a terminal device or a component (for example, a chip or a circuit) of the terminal device, or the first device may be a network device or a component (for example, a chip or a circuit) of the network device, or the first device may be an AI node or a component (for example, a chip or a circuit) of the AI node.

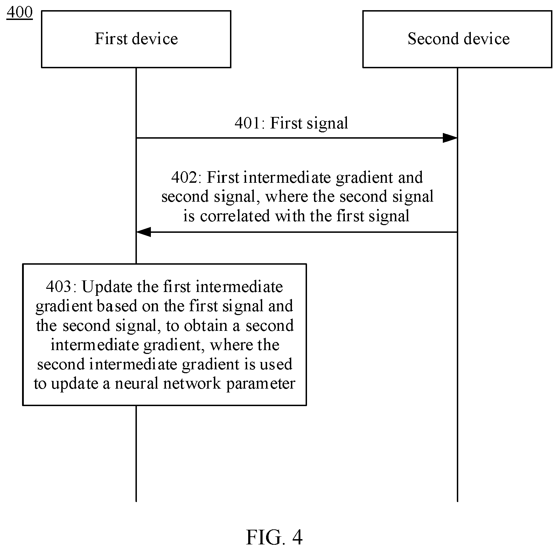

FIG. 4 is a diagram of a neural network training method 400 according to an embodiment of this application. The method 400 shown in FIG. 4 may include the following steps.

401: A first device sends a first signal.

Correspondingly, a second device receives the first signal. It may be understood that, in actual transmission, a signal may change after passing through a channel. For differentiation, the first signal received by the second device is referred to as a third signal, that is, the third signal is a signal obtained after the first signal passes through a channel.

The first signal may be a complex-number symbol, or may be a real-number symbol (for example, an imaginary part is 0). For example, the first signal may be a complex number mapped to an air interface resource (for example, a frequency domain resource).

Optionally, the first signal is any one of the following: a user-defined sequence, a reference signal, or a data signal.

For example, the first signal is the reference signal, for example, a demodulation reference signal (demodulation reference signal, DMRS), a channel state information-reference signal (channel state information-reference signal, CSI-RS), or a sounding reference signal (sounding reference signal, SRS).

For another example, the first signal is the user-defined sequence, for example, a user-defined pseudo-random (pseudo-noise, PN) sequence.

For another example, the first signal is the data signal. For example, the first signal is service data. For another example, the first signal is specific data. For example, processing such as coding and modulation does not need to be performed on the data.

402: The first device receives a first intermediate gradient and a second signal, where the second signal is correlated with the first signal.

Correspondingly, the second device sends the first intermediate gradient and the second signal. It may be understood that, in actual transmission, a signal may change after passing through a channel. For differentiation, the second signal sent by the second device is referred to as a fourth signal, that is, the second signal is a signal obtained after the fourth signal passes through a channel.

For the intermediate gradient, refer to the foregoing term explanation. Details are not described herein again.

The first intermediate gradient is used to update a neural network parameter. Specifically, the second device provides the first intermediate gradient for the first device, so that the first device updates, based on the first intermediate gradient, the neural network parameter located on (or deployed on) the first device.

For example, the neural network parameter may include at least one of the following: a quantity of layers of a neural network, a width of the neural network, a weight of a neuron, or a parameter in an activation function of the neuron.

Optionally, the first intermediate gradient is determined based on the first signal and/or the data signal.

For example, the first intermediate gradient is determined based on the first signal.

For example, when the first signal is the data signal, the first intermediate gradient is determined based on the first signal. In this case, because the first signal is the data signal, it may also be considered that the first intermediate gradient is determined based on the data signal.

In this embodiment of this application, for a manner of determining the first intermediate gradient based on the data signal, refer to an existing manner. This is not limited. For example, the second device may determine a loss function based on the data signal, and may further determine the first intermediate gradient based on the loss function. That the first intermediate gradient is determined based on the data signal may alternatively be replaced with that the first intermediate gradient is determined based on the loss function.

For another example, the first intermediate gradient is determined based on the data signal.

For example, when the first signal is the data signal or the user-defined sequence, the first intermediate gradient is determined based on the data signal.

For another example, the first intermediate gradient is determined based on the first signal and the data signal.

For example, when the first signal is the reference signal, the first intermediate gradient is determined based on the first signal and the data signal.

The following provides a specific example.

For example, when the first signal is the reference signal, the first signal may be further considered for determining the first intermediate gradient.

Specifically, because the first signal is the reference signal, after receiving the first signal, the second device may perform channel estimation based on the first signal, and determine the first intermediate gradient based on a channel estimation result. For example, the second device may learn of a channel status based on the channel estimation result, further compensate, based on the channel status, for the first intermediate gradient determined based on the loss function, to obtain a compensated first intermediate gradient, and send the compensated first intermediate gradient to the first device.

Considering that a signal may change after passing through a channel, that the first intermediate gradient is determined based on the first signal may alternatively be replaced with that the first intermediate gradient is determined based on the third signal (namely, the first signal obtained after passing through the channel). Specifically, the first device sends the first signal to the second device. After the first signal passes through the channel, the signal received by the second device is the third signal. The second device performs channel estimation based on the received third signal, and determines the first intermediate gradient based on the channel estimation result.

The second signal is correlated with the first signal. Based on this, the second signal may be determined based on the first signal. Specifically, after receiving the first signal sent by the first device, the second device may determine the second signal based on a correlation between the second signal and the first signal, and further send the second signal to the first device.

Considering that a signal may change after passing through a channel, that the second signal is correlated with the first signal may alternatively be replaced with that the fourth signal is correlated with the third signal. Specifically, the first device sends the first signal to the second device. After the first signal passes through the channel, the signal received by the second device is the third signal. The third signal is correlated with the fourth signal. Therefore, the second device determines the fourth signal based on the correlation. The second device sends the fourth signal to the first device. After the fourth signal passes through the channel, the first device receives the second signal. For ease of description, the following mainly uses the first signal and the second signal as examples for description.

Optionally, that the second signal is correlated with the first signal includes: The second signal and the first signal satisfy Formula 4 or Formula 5.

$$A2 = f(A1)$$

Formula 4

$$A2 = f\left(A1^*\right)$$

<div align="right">Formula 5</div>

Herein, $A1$ indicates the first signal, $A2$ indicates the second signal, and $A1^*$ indicates a conjugate operation on $A1$.

Considering that a signal may change after passing through a channel, Formula 4 may alternatively be replaced with $A4 = f(A3)$, and Formula 5 may alternatively be replaced with $A4 = f(A3^*)$. Herein, $A3$ indicates the third signal, namely, the first signal obtained after passing through the channel, $A4$ indicates the fourth signal, the second signal is the signal obtained after the fourth signal passes through the channel, and $A3^*$ indicates a conjugate operation on $A3$.

A specific form of the function $f$ is not limited. The following lists several possible forms. For meanings of parameters mentioned below, refer to the foregoing descriptions.

A first possible form: $A2 = \alpha A1$. Herein, $\alpha$ indicates a constant. Considering that a signal may change after passing through a channel, $A2 = \alpha A1$ may alternatively be replaced with $A4 = \alpha A3$.

A second possible form: $A2 = \alpha A1^*$. Considering that a signal may change after passing through a channel, $A2 = \alpha A1^*$ may alternatively be replaced with $A4 = \alpha A3^*$.

A third possible form: $A2 = \dfrac{1}{|A1|}A1$. Considering that a signal may change after passing through a channel, $A2 = \dfrac{1}{|A1|}A1$ may alternatively be replaced with $A4 = \dfrac{1}{|A3|}A3$.

A fourth possible form: $A2 = \dfrac{1}{|A1|}A1^*$. Considering that a signal may change after passing through a channel, $A2 = \dfrac{1}{|A1|}A1^*$ may alternatively be replaced with $A4 = \dfrac{1}{|A3|}A3^*$. $|A|$ indicates calculating an amplitude of the element A.

The first signal $A1$ is used as an example. It is assumed that the first signal includes a plurality of symbols (for example, complex-number symbols or real-number symbols). In this case, $|A1|$ indicates independent normalization processing on power of each of the plurality of symbols.

A fifth possible form: $A2 = \dfrac{1}{\|A1\|_2}A1$. Considering that a signal may change after passing through a channel, $A2 = \dfrac{1}{\|A1\|_2}A1$ may alternatively be replaced with $A4 = \dfrac{1}{\|A3\|_2}A3$. $\|x\|_p$ indicates a p-norm of the vector x. For example, $\|\mathbf{x}\|_p = \left(|x_1|^p + |x_2|^p + \cdots\right)^{\frac{1}{p}}$. When p is equal to 2, it may be understood that normalization processing is performed on power. The first signal $A1$ is used as an example. It is assumed that the first signal includes a plurality of symbols (for example, complex-number symbols or real-number symbols). In this case, $\|A1\|_2$ indicates normalization processing on power of a part or all of the plurality of symbols.

A sixth possible form: $A2 = \dfrac{1}{\|A1\|_2}A1^*$. Considering that a signal may change after passing through a channel, $A2 = \dfrac{1}{\|A1\|_2}A1^*$ may alternatively be replaced with $A4 = \dfrac{1}{\|A3\|_2}A3^*$.

The foregoing listed forms are merely examples for description. Any variant of the foregoing forms is applicable to embodiments of this application.

Optionally, a correlation form between the second signal and the first signal, for example, Formula 4, Formula 5, or any one of the foregoing possible forms, may be predefined, or may be sent by the first device to the second device, or may be sent by the second device to the first device. This is not limited.

403: The first device updates the first intermediate gradient based on the first signal and the second signal, to obtain a second intermediate gradient, where the second intermediate gradient is used to update the neural network parameter.

Optionally, that the first device updates the first intermediate gradient based on the first signal and the second signal includes: The first device determines a channel reciprocity error value based on the first signal and the second signal, and updates (corrects, adjusts, or compensates for) the first intermediate gradient based on the channel reciprocity error value.

For example, a channel reciprocity error E determined by the first device based on the first signal and the second signal satisfies E=$A2A1$.

For example, the second intermediate gradient obtained by the first device satisfies gE*. Herein, g indicates the first intermediate gradient, and the superscript * indicates a conjugate operation.

Based on this embodiment of this application, the first device may determine the channel reciprocity error based on the signal (namely, the first signal) sent by the first device, the received signal (namely, the second signal), and the relationship between the two signals, may further update the received intermediate gradient (namely, the first intermediate gradient) based on the channel reciprocity error, and then update the neural network parameter based on an updated intermediate gradient (namely, the second intermediate gradient). In this manner, a gradient error caused by channel reciprocity can be overcome, and more scenarios are applicable.

Optionally, the method 400 further includes: The first device sends first indication information, where the first indication information indicates a type of the first signal and/or a type of the second signal. Correspondingly, the second device receives the first indication information.

The first indication information may be implemented by using one or more bits or a bitmap (bitmap). The following provides descriptions with reference to several examples.

Example 1: The first indication information indicates the types of the first signal and the second signal.

For example, the types of the first signal and the second signal may exist in a form of a table, a function, text, or a character string, for example, may be stored or transmitted. Table 1 is an example of presenting the types of the first signal and the second signal in a form of a table.

Table 1

| Indication | Type (type) | Description |
|---|---|---|
| 00 | type A | The first signal is a user-defined sequence, and the second signal is correlated with the first signal |
| 01 | type B | The first signal is a data signal, and the second signal is correlated with the first signal |
| 10 | type C | The first signal is a reference signal, and the second signal is correlated with the first signal |
| 11 | type D | The first signal is a reference signal, and the second signal is a reference signal |

The type A indicates that the first signal is the user-defined sequence, and the second signal is correlated with the first signal. The type B indicates that the first signal is the data signal, and the second signal is correlated with the first signal, or the second signal is a subset of the first signal. The type C indicates that the first signal is the reference signal, and the second signal is correlated with the first signal. The type D indicates that the first signal is the reference signal, the second signal is the reference signal, and the first signal and the second signal may be independent. The type D is described in detail below with reference to a method 1100.

A specific form in which the second signal is correlated with the first signal may be Formula 4, Formula 5, or any one of the first possible form to the sixth possible form. Further, the specific form in which the first signal is correlated with the second signal may also be listed in Table 1. In different types, specific forms in which the first signal is correlated with the second signal may be the same or may be different.

Table 1 is used as an example. For example, the first indication information may be implemented by using two bits. For example, it is assumed that the two bits are set to "00". In this case, it indicates that the type of the first signal and the type of the second signal belong to the type A, that is, the first signal is the user-defined sequence, and the second signal is correlated with the first signal. For another example, it is assumed that the two bits are set to "01". In this case, it indicates that the type of the first signal and the type of the second signal belong to the type B, that is, the first signal is the data signal, and the second signal is correlated with the first signal. For another example, it is assumed that the two bits are set to "10". In this case, it indicates that the type of the first signal and the type of the second signal belong to the type C, that is, the first signal is the reference signal, and the second signal is correlated with the first signal. For another example, it is assumed that the two bits are set to "11". In this case, it indicates that the type of the first signal and the type of the second signal belong to the type D, that is, the first signal is the reference signal, and the second signal is the reference signal.

The foregoing descriptions are example descriptions, and constitute no limitation. For example, the first indication information may alternatively be implemented by using the bitmap. For example, a 4-bit bitmap indicates the types of the first signal and the second signal, and the four bits respectively correspond to the type A, the type B, the type C, and the type D. If a value of a bit is "1", it indicates that the first signal and the second signal of this type are enabled. For example, if a value of the bitmap is "1000", it indicates that the types of the first signal and the second signal belong to the type A. For another example, if a value of the bitmap is "0100", it indicates that the types of the first signal and the second signal belong to the type B. For another example, if a value of the bitmap is "0010", it indicates that the types of the first signal and the second signal belong to the type C. For another example, if a value of the bitmap is "0001", it indicates that the types of the first signal and the second signal belong to the type D.

Example 2: The first indication information indicates the type of the first signal.

For example, the type of the first signal may exist in a form of a table, a function, text, or a character string, for example, may be stored or transmitted. Table 2 is an example of presenting the type of the first signal in a form of a table.

Table 2

| Indication | Type of a first signal |
|---|---|
| 00 | User-defined sequence |
| 01 | Data signal |
| 10 | Reference signal |

Table 2 is used as an example. For example, the first indication information may be implemented by using two bits. For example, it is assumed that the two bits are set to "00". In this case, it indicates that the first signal is the user-defined sequence. For another example, it is assumed that the two bits are set to "01". In this case, it indicates that the first signal is the data signal. For another example, it is assumed that the two bits are set to "10". In this case, it indicates that the first signal is the reference signal.

The foregoing descriptions are example descriptions, and constitute no limitation. For example, the first indication information may alternatively be implemented by using the bitmap. For example, a 3-bit bitmap indicates the type of the first signal, and the three bits respectively correspond to the user-defined sequence, the data signal, and the reference signal. If a value of a bit is "1", it indicates that the first signal of this type is enabled. For example, if a value of the bitmap is "100", it indicates that the first signal is the user-defined sequence. For another example, if a value of the bitmap is "010", it indicates that the first signal is the data signal. For another example, if a value of the bitmap is "001", it indicates that the first signal is the reference signal.

In the example 2, the type of the second signal may be predefined, or may be determined based on the type of the first signal. For example, the second signal is correlated with the first signal. If the first signal is the data signal, it implies that the second signal is also the data signal, for example, a subset of the data signal.

Example 3: The first indication information indicates the type of the second signal.

For example, the type of the second signal may exist in a form of a table, a function, text, or a character string, for example, may be stored or transmitted. Table 3 is an example of presenting the type of the second signal in a form of a table.

Table 3

| Indication | Type of a second signal |
|---|---|
| 1 | Data signal |
| 0 | Reference signal |

Table 3 is used as an example. For example, the first indication information may be implemented by using one bit. For example, it is assumed that the one bit is set to "1". In this case, it indicates that the second signal is the data signal. For another example, it is assumed that the one bit is set to "0". In this case, it indicates that the first signal is the reference signal.

The foregoing descriptions are example descriptions, and constitute no limitation. For example, the first indication information may alternatively be implemented by using the bitmap. For example, a 2-bit bitmap indicates the type of the first signal, and the two bits respectively correspond to the data signal and the reference signal. For details, refer to the descriptions in the example 1 and the example 2. Details are not described herein again.

In the example 3, the type of the first signal may be predefined, or may be determined based on the type of the second signal. For example, the second signal is correlated with the first signal. If the second signal is the data signal, it implies that the first signal is also the data signal.

It may be understood that Table 1 to Table 3 are merely examples for description, and any variant of Table 1 to Table 3 is applicable to this embodiment of this application. For example, in Table 1 and/or Table 2, the reference signal and the user-defined sequence may be combined. For example, in Table 2, there are two types of first signals: a data signal and a reference signal. For another example, considering that a signal may change after passing through a channel, the second signal in Table 1 to Table 3 may be replaced with the fourth signal.

Optionally, the method 400 further includes: The first device receives second indication information, where the second indication information indicates a pattern of the second signal. Correspondingly, the second device sends the second indication information. Based on this, the first device may accurately receive the second signal based on the pattern of the second signal.

For example, the pattern of the second signal includes at least one of the following: a mask of the second signal, a resource occupied by the second signal, and a sequence number of the second signal. In other words, the first device may receive the second indication information, where the second indication information indicates at least one of the following: the mask of the second signal, the resource occupied by the second signal, and the sequence number of the second signal.

The mask of the second signal may indicate that a location at which the second signal is mapped is set to 1, and another location is set to 0. For example, the mask of the second signal may indicate that in one resource block (resource block, RB) and a plurality of orthogonal frequency division multiplexing (orthogonal frequency division multiplexing, OFDM) symbols (for example, 14 OFDM symbols), a location at which the second signal is mapped is set to 1, and other locations are set to 0.

The resource occupied by the second signal includes, for example, a time domain resource and/or a frequency domain resource occupied by the second signal. For example, the resource occupied by the second signal includes a sequence number of a subcarrier on which the second signal is located and a sequence number of an OFDM symbol. For example, it is assumed that the resource includes one RB (the RB includes a plurality of subcarriers) and a plurality of OFDM symbols (for example, 14 OFDM symbols), a row indicates the subcarrier, and a column indicates the OFDM symbol. In this case, the resource occupied by the second signal may be indicated by indicating a row index and a column index, that is, a location of the second signal is indicated.

The sequence number of the second signal may indicate locations at which the second signal is located. For example, the first device sends a DMRS to the second device, where the second signal is a subset of the DMRS, and locations at which the DMRS is the second signal may be learned of based on the sequence number of the second signal.

For ease of understanding, the following describes, with reference to possible forms of the first signal, several possible procedures applicable to the method 400.

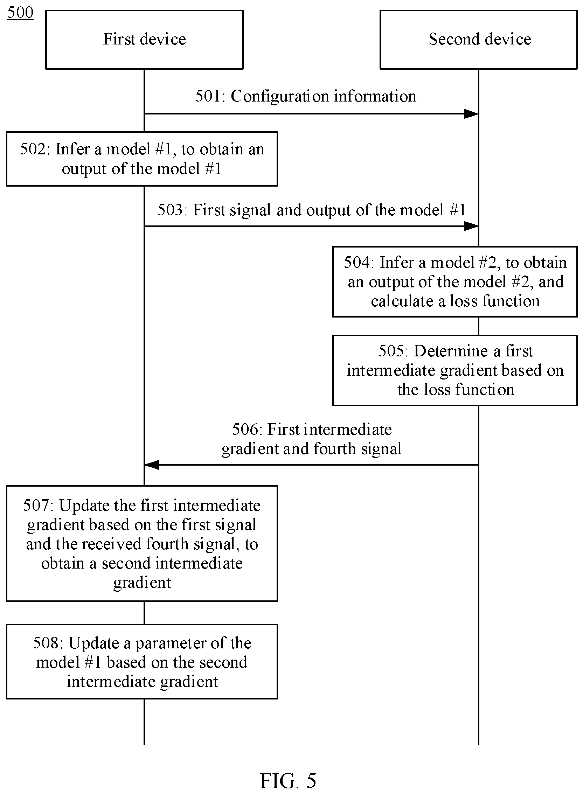

FIG. 5 is a schematic flowchart of a method 500 according to an embodiment of this application. The method 500 is applicable to a scenario in which the first signal is the user-defined sequence. The method 500 shown in FIG. 5 may include the following steps.

501: A first device sends configuration information to a second device.

The configuration information may include at least one of the following: a type of a first signal, a type of a second signal, a pattern of the first signal, and a pattern of the second signal. In this embodiment of this application, the first signal is a user-defined sequence, and the second signal is correlated with the first signal. For related solutions of the type and the pattern of the signal, refer to the descriptions in the method 400. Details are not described herein again.

502: The first device infers a model #1, to obtain an output of the model #1.

Specifically, to-be-transmitted data is input to the model #1, to obtain the output of the model #1, namely, a data signal.

The model #1 may be a model located or deployed on the first device, for example, a neural network model.

503: The first device sends the first signal and the output of the model #1 to the second device.

For example, the first device maps the first signal and the output of the model #1 (namely, the data signal) to an air interface resource, and then sends the first signal and the output to the second device. The air interface resource includes at least one of the following: a time domain resource, a frequency domain resource, and a space domain resource. Correspondingly, the second device receives the first signal and the data signal obtained after passing through a channel. For differentiation, the first signal sent by the first device is denoted as $A1$, and the first signal obtained after passing through the channel is denoted as $A3$.

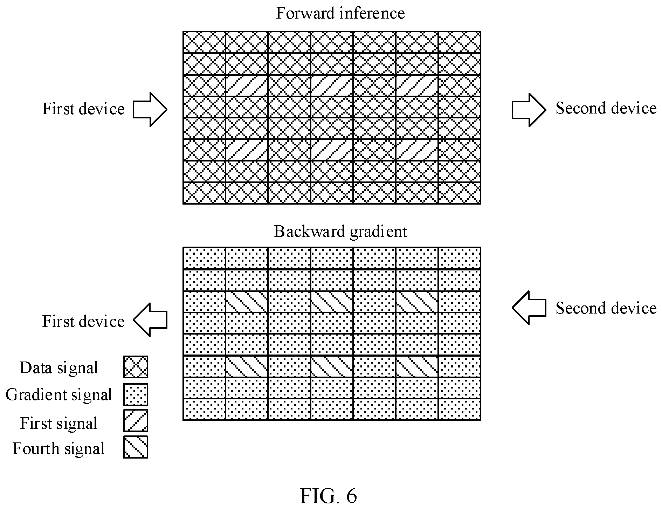

FIG. 6 is a diagram of signal sending and feedback applicable to the method 500 according to an embodiment of this application. As shown in FIG. 6, in forward inference, the first device maps the first signal and the data signal to an air interface resource, and then may transmit the first signal and the data signal to the second device. When the first signal is mapped, the first signal may be separately mapped to an air interface resource, or may replace the original data signal when being mapped to an air interface resource. For example, it is assumed that a quantity of first signals is n, and a quantity of data signals is m. The first signal may be separately mapped to the air interface resource, that is, a quantity of mapped signals is (n+m). Alternatively, the first signal may replace the original data signal when being mapped to the air interface resource, that is, a quantity of mapped signals is m.

In the method 500, the second device may determine a first intermediate gradient based on the data signal. For example, the second device determines a loss function based on the data signal, and further determines the first intermediate gradient based on the loss function, as described in steps 504 and 505 below.

504: The second device infers a model #2, to obtain an output of the model #2, and calculates the loss function.

Specifically, the received data signal is input to the model #2, to obtain the output of the model #2. The second device may calculate the loss function based on the output of the model #2. For a specific calculation manner, refer to an existing manner. This is not limited.

The model #2 may be a model located or deployed on the second device, for example, a neural network model.

505: The second device determines the first intermediate gradient based on the loss function.

For example, the first intermediate gradient determined by the second device satisfies: $\frac{\partial L}{\partial r}\frac{\partial r}{\partial Y}$ . Herein, L indicates the loss function, r indicates the output of the model #2, Y indicates an input of the model #2, and $\partial$ indicates calculating a partial derivative.

506: The second device sends the first intermediate gradient and a fourth signal to the first device.

For example, the second device maps the first intermediate gradient and the fourth signal to an air interface resource, and then sends the first intermediate gradient and the fourth signal to the first device. Correspondingly, the first device receives the fourth signal (namely, the second signal) obtained after passing through a channel and the first intermediate gradient. For differentiation, the fourth signal is denoted as $A4$, and the fourth signal obtained after passing through the channel is denoted as the second signal $A2$.

As shown in FIG. 6, in backward inference, the second device maps the first intermediate gradient and the fourth signal to an air interface resource, and then may transmit the first intermediate gradient and the fourth signal to the first device.

The fourth signal is correlated with a third signal, that is, the fourth signal may be determined based on the third signal. Specifically, after receiving the third signal, the second device determines the fourth signal based on a correlation form between the fourth signal and the third signal. The correlation form between the fourth signal and the third signal may be predefined, or may be sent by the first device to the second device. This is not limited.

The following describes the correlation form between the fourth signal and the third signal. For example, the fourth signal and the third signal satisfy any one of the following: $A4 = f(A3)$ or $A4 = f(A3^*)$. A specific form of the function $f$ is not limited. For example, $A4 = \alpha A3$. For another example, $A4 = \alpha A3^*$. For another example, $A4 = \frac{1}{|A3|}A3$ . For another example, $A4 = \frac{1}{|A3|}A3^*$ . For another example, $A4 = \frac{1}{\|A3\|_2}A3$ . For another example, $A4 = \frac{1}{\|A3\|_2}A3^*$ .

507: The first device updates the first intermediate gradient based on the first signal and the received fourth signal, to obtain a second intermediate gradient.

In other words, the first device updates the first intermediate gradient based on the first signal and the second signal, to obtain the second intermediate gradient. Specifically, the first device calculates a channel reciprocity error value based on the first signal and the second signal, and updates (or corrects, or adjusts, or compensates for) the first intermediate gradient based on the channel reciprocity error value.

For example, a channel reciprocity error E obtained by the first device through calculation satisfies E=$A2A1$.

For example, the second intermediate gradient obtained by the first device satisfies g$E^*$.

508: The first device updates a parameter of the model #1 based on the second intermediate gradient.

Specifically, the first device calculates the parameter of the model #1 based on the second intermediate gradient, and updates a gradient of the model #1.

Optionally, the foregoing steps, for example, step 502 to step 508, may be repeated until a value of the loss function is less than a threshold or meets a target requirement, to complete training of the neural network.

According to the method 500, the first device may customize a sequence, namely, the first signal, and may determine the channel reciprocity error based on the first signal sent by the first device to the second device and the second signal received by the first device, so that the intermediate gradient provided by the second device can be updated based on the channel reciprocity error, and the model parameter is updated based on an updated intermediate gradient. In this way, a gradient error caused by channel reciprocity can be overcome, and more scenarios are applicable.

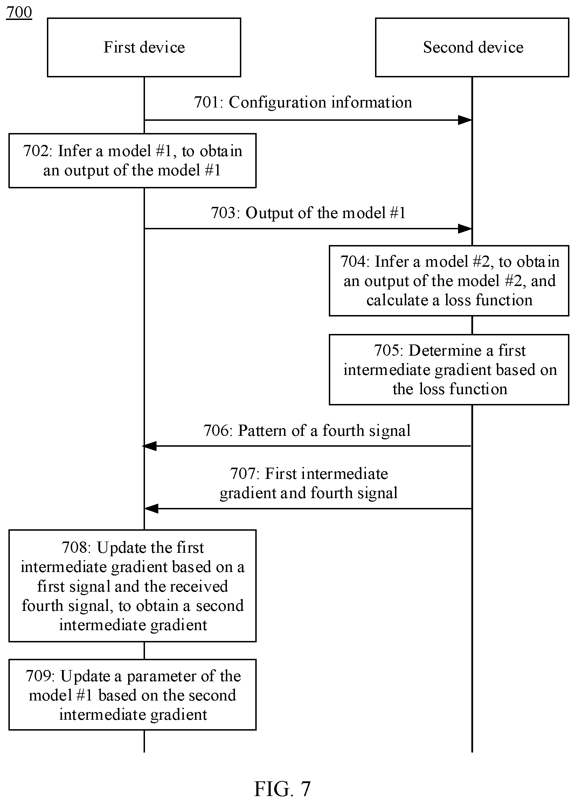

FIG. 7 is a schematic flowchart of a method 700 according to another embodiment of this application. The method 700 is applicable to a scenario in which the first signal is the data signal. The method 700 shown in FIG. 7 may include the following steps.

701: A first device sends configuration information to a second device.

The configuration information includes a type of a first signal and/or a type of a second signal. In this embodiment of this application, the first signal is a data signal, and the second signal is correlated with the first signal.

702: The first device infers a model #1, to obtain an output of the model #1.

For steps 701 and 702, refer to steps 501 and 502 in the method 500. Details are not described herein again.

703: The first device sends the output of the model #1 to the second device.

For example, the first device maps the output of the model #1 (namely, the data signal) to an air interface resource, and then sends the output to the second device. Correspondingly, the second device receives the data signal obtained after passing through a channel. For differentiation, the data signal sent by the first device is denoted as $A1$, and

the data signal obtained after passing through the channel is denoted as $A3$.

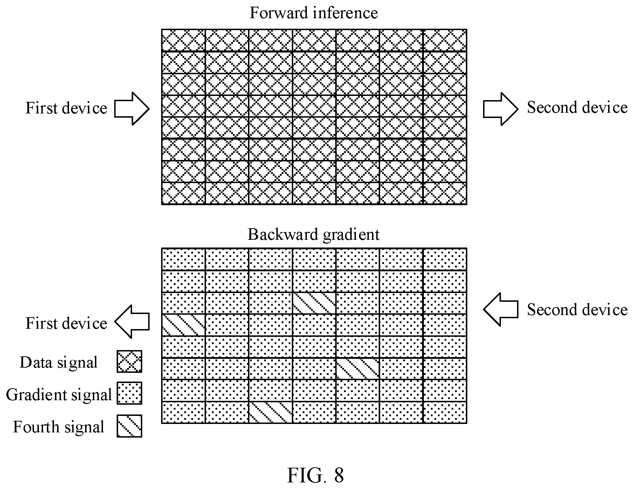

FIG. 8 is a diagram of signal sending and feedback applicable to the method 700 according to an embodiment of this application. As shown in FIG. 8, in forward inference, the first device maps the data signal to an air interface resource, and then may transmit the data signal to the second device. It can be learned that, a difference from the method 500 lies in that, in the method 700, no additional first signal needs to be sent, and the data signal can implement a function of the first signal.

In the method 700, the second device may determine a first intermediate gradient based on the first signal. For example, the second device determines a loss function based on the first signal (namely, the data signal), and further determines the first intermediate gradient based on the loss function, as described in steps 704 and 705 below.

704: The second device infers a model #2, to obtain an output of the model #2, and calculates the loss function.

705: The second device determines the first intermediate gradient based on the loss function.

For steps 704 and 705, refer to steps 504 and 505 in the method 500. Details are not described herein again.

706: The second device sends a pattern of a fourth signal to the first device.

For the pattern of the fourth signal, refer to the pattern of the second signal in the method 400. Details are not described herein again.

707: The second device sends the first intermediate gradient and the fourth signal to the first device.

For example, the second device maps the first intermediate gradient and the fourth signal to an air interface resource, and then sends the first intermediate gradient and the fourth signal to the first device. Correspondingly, the first device receives the fourth signal obtained after passing through a channel and the first intermediate gradient. For differentiation, the fourth signal is denoted as $A4$, and the fourth signal obtained after passing through the channel is denoted as the second signal $A2$.

As shown in FIG. 8, in backward inference, the second device maps the first intermediate gradient and the fourth signal to an air interface resource, and then may transmit the first intermediate gradient and the fourth signal to the first device.

The fourth signal is correlated with the data signal $A3$, and the fourth signal may be determined based on the data signal $A3$. Specifically, after receiving the data signal $A3$, the second device determines the fourth signal based on a correlation form between the fourth signal and the data signal $A3$. For a specific correlation form between the fourth signal and the data signal $A3$, refer to step 506 in the method 500. Details are not described herein again.

708: The first device updates the first intermediate gradient based on the first signal and the received fourth signal, to obtain a second intermediate gradient.

In other words, the first device updates the first intermediate gradient based on the first signal and the second signal, to obtain the second intermediate gradient.

709: The first device updates a parameter of the model #1 based on the second intermediate gradient.

For steps 708 and 709, refer to steps 507 and 508 in the method 500. Details are not described herein again.

Optionally, the foregoing steps, for example, step 702 to step 709, may be repeated until a value of the loss function is less than a threshold or meets a target requirement, to complete training of a neural network.

According to the method 700, the data signal can implement the function of the first signal. Specifically, the first device may determine a channel reciprocity error based on the sent data signal and the second signal received by the first device, further update, based on the channel reciprocity error, the intermediate gradient provided by the second device, and further update a model parameter based on an updated intermediate gradient. In this way, a gradient error caused by channel reciprocity can be overcome.

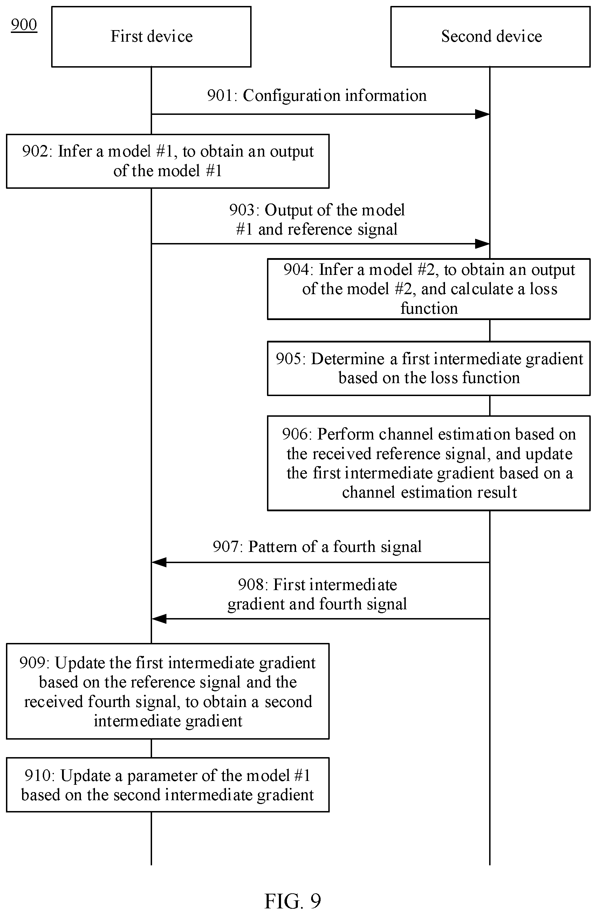

FIG. 9 is a schematic flowchart of a method 900 according to still another embodiment of this application. The method 900 is applicable to a scenario in which the first signal is the reference signal. The method 900 shown in FIG. 9 may include the following steps.

901: A first device sends configuration information to a second device.

The configuration information includes a type of a first signal and/or a type of a second signal. In this embodiment of this application, the first signal is a reference signal, and the second signal is correlated with the first signal.

902: The first device infers a model #1, to obtain an output of the model #1.

For steps 901 and 902, refer to steps 501 and 502 in the method 500. Details are not described herein again.

903: The first device sends the output of the model #1 and the reference signal to the second device.

For example, the first device maps the output of the model #1 (namely, a data signal) and the reference signal (namely, the first signal) to an air interface resource, and then sends the output and the reference signal to the second device. Correspondingly, the second device receives the data signal and the reference signal obtained after passing through a channel. For example, the reference signal is a DMRS. For differentiation, the reference signal sent by the first device is denoted as $A1$, and the reference signal obtained after passing through the channel is denoted as $A3$.

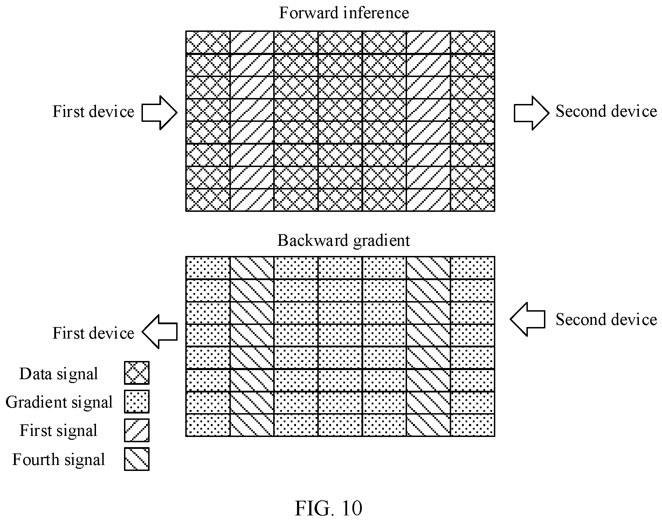

FIG. 10 is a diagram of signal sending and feedback applicable to the method 900 according to an embodiment of this application. As shown in FIG. 10, in forward inference, the first device maps the data signal and the reference signal (for example, the DMRS) to an air interface resource, and then may transmit the data signal and the reference signal to the second device. It can be learned that a difference from the method 500 (the first signal is the user-defined sequence) and the method 700 (the first signal is the data signal) lies in that, in the method 900, the first signal is the reference signal.

In the method 900, the second device may determine a first intermediate gradient based on the first signal (namely, the reference signal) and the data signal. For example, the second device determines a loss function based on the data signal, and then determines the first intermediate gradient based on the loss function, as shown in steps 904 and 905 below. Further, the second device updates, based on the reference signal, the first intermediate gradient determined based on the loss function, as shown in step 906.

904: The second device infers a model #2, to obtain an output of the model #2, and calculates the loss function.

905: The second device determines the first intermediate gradient based on the loss function.

For steps 904 and 905, refer to steps 504 and 505 in the method 500. Details are not described herein again.

906: The second device performs channel estimation based on the received reference signal, and updates the first intermediate gradient based on a channel estimation result.

The second device may perform channel estimation based on the received reference signal $A3$, and correct the first intermediate gradient (namely, the first intermediate gradient determined based on the data signal, namely, the first intermediate gradient determined in step 905) based on the channel estimation result.

907: The second device sends a pattern of a fourth signal to the first device.

908: The second device sends the first intermediate gradient and the fourth signal to the first device.

For example, the second device maps the first intermediate gradient and the fourth signal to an air interface resource #2, and then sends the first intermediate gradient and the fourth signal to the first device. Correspondingly, the first device receives the fourth signal obtained after passing through a channel and the first intermediate gradient. For differentiation, the fourth signal is denoted as $A4$, and the fourth signal obtained after passing through the channel is denoted as the second signal $A2$.

As shown in FIG. 10, in backward inference, the second device maps the first intermediate gradient and the fourth signal to an air interface resource, and then may transmit the first intermediate gradient and the fourth signal to the first device.

The fourth signal is correlated with the reference signal $A3$, and the fourth signal may be determined based on the reference signal $A3$. Specifically, after receiving the reference signal A3, the second device determines the fourth signal based on a correlation form between the fourth signal and the reference signal $A3$. For a specific correlation form between the fourth signal and the reference signal $A3$, refer to step 506 in the method 500. Details are not described herein again.

909: The first device updates the first intermediate gradient based on the reference signal and the received fourth signal, to obtain a second intermediate gradient.

In other words, the first device updates the first intermediate gradient based on the reference signal and the second signal, to obtain the second intermediate gradient.

910: The first device updates a parameter of the model #1 based on the second intermediate gradient.

For steps 909 and 910, refer to steps 507 and 508 in the method 500. Details are not described herein again.

Optionally, the foregoing steps, for example, step 902 to step 910, may be repeated until a value of the loss function is less than a threshold or meets a target requirement, to complete training of a neural network.

According to the method 700, the reference signal can implement a function of the first signal. Specifically, the first device may determine a channel reciprocity error based on the sent reference signal and the second signal received by the first device, further update, based on the channel reciprocity error, the intermediate gradient provided by the second device, and further update a model parameter based on an updated intermediate gradient. In this way, a gradient error caused by channel reciprocity can be overcome.

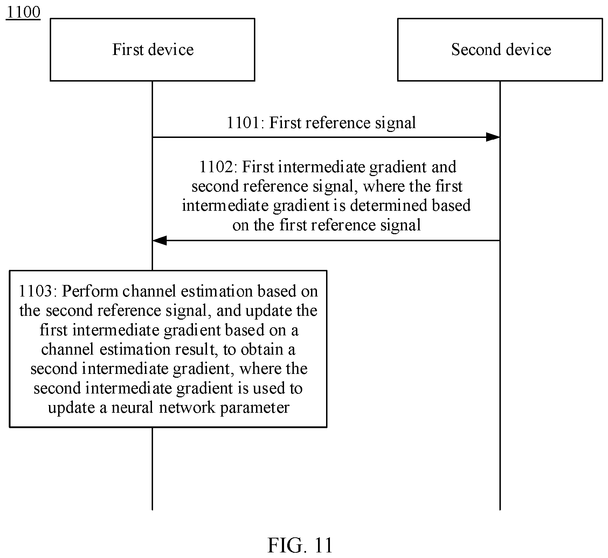

The foregoing describes in detail, with reference to FIG. 4 to FIG. 10, a related solution in which the first signal is correlated with the second signal, and the first device determines the channel reciprocity error based on the first signal and the second signal, to update the first intermediate gradient. The following describes another solution with reference to FIG. 11 to FIG. 13, namely, a related solution in which the first device and the second device may separately perform channel estimation, to update the first intermediate gradient.

FIG. 11 is a diagram of a neural network training method 1100 according to an embodiment of this application. The method 1100 shown in FIG. 11 may include the following steps.

1101: A first device sends a first reference signal.

Correspondingly, a second device receives the first reference signal. It may be understood that, in actual transmission, a signal may change after passing through a channel. For differentiation, the first reference signal received by the second device is referred to as a third reference signal, that is, the third reference signal is a signal obtained after the first reference signal passes through a channel.

The first reference signal may be, for example, a DMRS, a CSI-RS, or an SRS.

1102: The first device receives a first intermediate gradient and a second reference signal, where the first intermediate gradient is determined based on the first reference signal.

Correspondingly, the second device sends the first intermediate gradient and the second reference signal. It may be understood that, in actual transmission, a signal may change after passing through a channel. For differentiation, the second reference signal sent by the second device is referred to as a fourth reference signal, that is, the second reference signal is a signal obtained after the fourth reference signal passes through a channel.

For the intermediate gradient, refer to the foregoing term explanation. Details are not described herein again.

That the first intermediate gradient is determined based on the first reference signal may be understood as that the second device determines the first intermediate gradient based on the first reference signal. Specifically, after receiving the first reference signal, the second device may perform channel estimation based on the first reference signal, and determine the first intermediate gradient based on a channel estimation result. For example, the second device may learn of a channel status based on the channel estimation result, further compensate, based on the channel status, for the first intermediate gradient determined based on a loss function, to obtain a compensated first intermediate gradient, and send the compensated first intermediate gradient to the first device.

Considering that a signal may change after passing through a channel, that the first intermediate gradient is determined based on the first reference signal may alternatively be replaced with that the first intermediate gradient is determined based on the third reference signal (namely, the first reference signal obtained after passing through the channel). Specifically, the first device sends the first reference signal to the second device. After the first reference signal passes through the channel, the reference signal received by the second device is the third reference signal. The second device performs channel estimation based on the received third reference signal, and determines the first intermediate gradient based on the channel estimation result.

The second reference signal may be, for example, a DMRS, a CSI-RS, or an SRS. The second reference signal and the first reference signal may be independent of each other, that is, the reference signal used by the first device for channel estimation and the reference signal used by the second device for channel estimation may be independent of each other.

1103: The first device performs channel estimation based on the second reference signal, and updates the first intermediate gradient based on a channel estimation result, to obtain a second intermediate gradient, where the second intermediate gradient is used to update a neural network parameter.

Based on this embodiment of this application, the second device performs channel estimation based on the reference signal sent by the first device, further determines the intermediate gradient based on the channel estimation result, and sends the intermediate gradient to the first device. The first device performs channel estimation based on the reference signal sent by the second device, and further updates the received intermediate gradient based on the channel estimation result. In this way, a channel reciprocity error is considered for the intermediate gradient, so that a gradient error caused by channel reciprocity can be overcome.

Optionally, the method 1100 further includes: The first device sends first indication information, where the first indication information indicates a type of the first reference signal and/or a type of the second reference signal. Table 1 is used as an example. In this embodiment of this application, the type of the first signal and the type of the second signal belong to the type D. For this solution, refer to the related descriptions in the method 400. Details are not described herein again.

Optionally, the method 1100 further includes: The first device receives second indication information, where the second indication information indicates a pattern of the second reference signal. For this solution, refer to the related descriptions in the method 400. Details are not described herein again.

For ease of understanding, the following describes a possible procedure applicable to the method 1100.

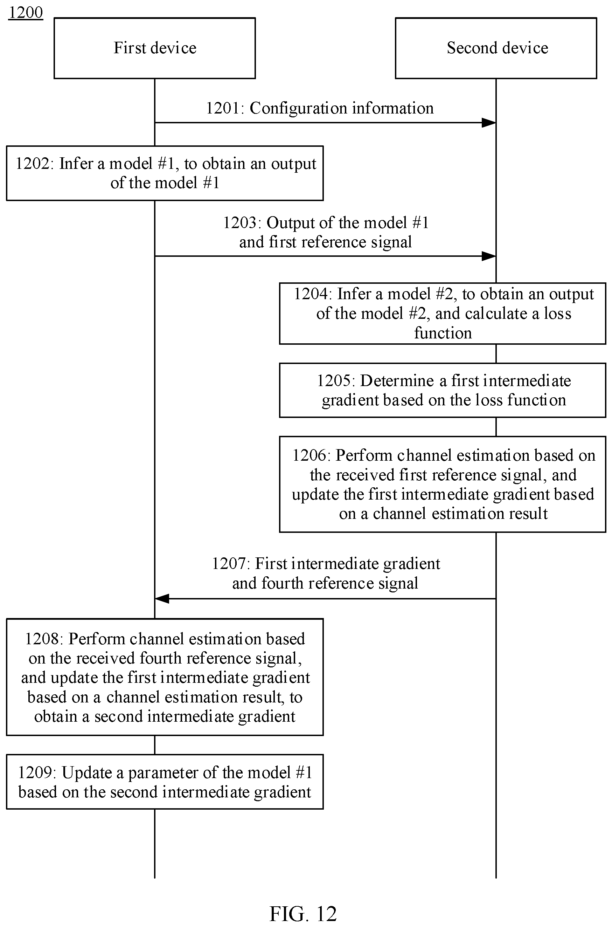

FIG. 12 is a schematic flowchart of a method 1200 according to yet another embodiment of this application. The method 1200 is applicable to a scenario in which both the first signal and the second signal are reference signals. The method 1200 shown in FIG. 12 may include the following steps.

1201: A first device sends configuration information to a second device.

The configuration information includes a type of a first signal and/or a type of a second signal. In this embodiment of this application, the first signal is a first reference signal, and the second signal is a second reference signal.

1202: The first device infers a model #1, to obtain an output of the model #1.

For steps 1201 and 1202, refer to steps 501 and 502 in the method 500. Details are not described herein again.

1203: The first device sends the output of the model #1 and the first reference signal to the second device.

For example, the first device maps the output of the model #1 (namely, a data signal) and the first reference signal to an air interface resource, and then sends the output and the first reference signal to the second device. Correspondingly, the second device receives the data signal and the first reference signal obtained after passing through a channel. For example, the first reference signal is a DMRS. For differentiation, the first reference signal obtained after passing through the channel is denoted as a third reference signal.

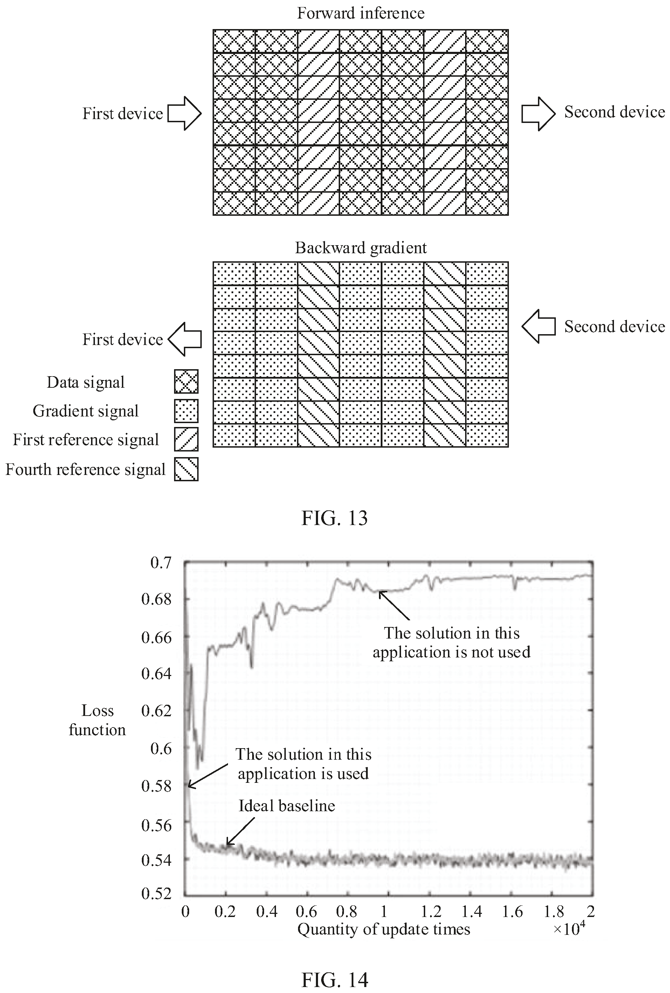

FIG. 13 is a diagram of signal sending and feedback applicable to the method 1200 according to an embodiment of this application. As shown in FIG. 13, in forward inference, the first device maps the data signal and the first reference signal to an air interface resource, and then may transmit the data signal and the first reference signal to the second device.

1204: The second device infers a model #2, to obtain an output of the model #2, and calculates a loss function.

1205: The second device determines a first intermediate gradient based on the loss function.

For steps 1204 and 1205, refer to steps 504 and 505 in the method 500. Details are not described herein again.

1206: The second device performs channel estimation based on the received first reference signal, and updates the first intermediate gradient based on a channel estimation result.

In other words, the second device performs channel estimation based on the third reference signal.

For step 1206, refer to step 906 in the method 900. Details are not described herein again.

1207: The second device sends the first intermediate gradient and a fourth reference signal to the first device.

For example, the second device maps the first intermediate gradient and the fourth reference signal to an air interface resource, and then sends the first intermediate gradient and the fourth reference signal to the first device. Correspondingly, the first device receives the fourth reference signal obtained after passing through a channel and the first intermediate gradient. For differentiation, the fourth reference signal obtained after passing through the channel is denoted as the second reference signal.

As shown in FIG. 13, in backward inference, the second device maps the first intermediate gradient and the fourth reference signal to an air interface resource, and then may transmit the first intermediate gradient and the fourth reference signal to the first device.

Optionally, before step 1207, the method 1200 further includes: The second device sends a pattern of the fourth reference signal to the first device.

1208: The first device performs channel estimation based on the received fourth reference signal, and updates the first intermediate gradient based on a channel estimation result, to obtain a second intermediate gradient.

In other words, the first device performs channel estimation based on the second reference signal.

1209: The first device updates a parameter of the model #1 based on the second intermediate gradient.

Optionally, the foregoing steps, for example, step 1202 to step 1209, may be repeated until a value of the loss function is less than a threshold or meets a target requirement, to complete training of a neural network.

According to the method 1200, the second device performs channel estimation based on the reference signal sent by the first device, further determines the intermediate gradient based on the channel estimation result, and sends the intermediate gradient to the first device. The first device performs channel estimation based on the reference signal sent by the second device, and further updates the received intermediate gradient based on the channel estimation result. In this way, a channel reciprocity error is considered for the intermediate gradient, so that a gradient error caused by channel reciprocity can be overcome.

The foregoing describes, with reference to FIG. 4 to FIG. 12, the two solutions provided in embodiments of this application. According to the solutions provided in embodiments of this application, model training can also be implemented in a scenario in which channel reciprocity is poor. In addition, according to the solutions provided in embodiments of this application, a decrease speed of the loss function can be the same as an ideal baseline.

FIG. 14 is a diagram of a decrease of a loss function in a case in which the solutions in embodiments of this application are used. In FIG. 14, a horizontal axis indicates a quantity of update times, and a vertical axis indicates a loss function. It can be learned from FIG. 14 that, according to the solution provided in embodiments of this application, a decrease speed of the loss function can be the same as an ideal baseline.

The following describes a signal processing procedure applicable to embodiments of this application.

After embodiments of this application, a signal mapping module and a signal demapping module may be added. The signal mapping module is configured to map a signal, and the signal demapping module is configured to receive a signal.

Optionally, in a scenario in which a first device sends a signal to a second device, a first signal mapping module is added to a first device side, and correspondingly, a first signal demapping module is added to a second device side. It may be understood that if the first signal is a data signal, the first signal mapping module and the first signal demapping module may not be added.

For example, on the first device side, after a neural network deployed on the first device outputs a data signal and maps the data signal, a first signal may be mapped by using the first signal mapping module, and then the first signal is sent by using a waveform module. Correspondingly, on the second device side, after air interface signals (for example, the first signal and the data signal) are processed by a de-waveform module, the first signal is received by using the first signal demapping module, and the data signal is received by using a data demapping module.

Optionally, in a scenario in which the second device sends a signal to the first device, a second signal mapping module is added to the second device side, and correspondingly, a second signal demapping module is added to the first device side.

For example, on the second device side, the second signal mapping module may be added after intermediate gradient mapping. Correspondingly, on the first device side, after air interface signals (for example, a second signal and an intermediate gradient signal) are processed by the de-waveform module, the second signal is received by using the second signal demapping module, and the intermediate gradient is received by using an intermediate gradient demapping module.

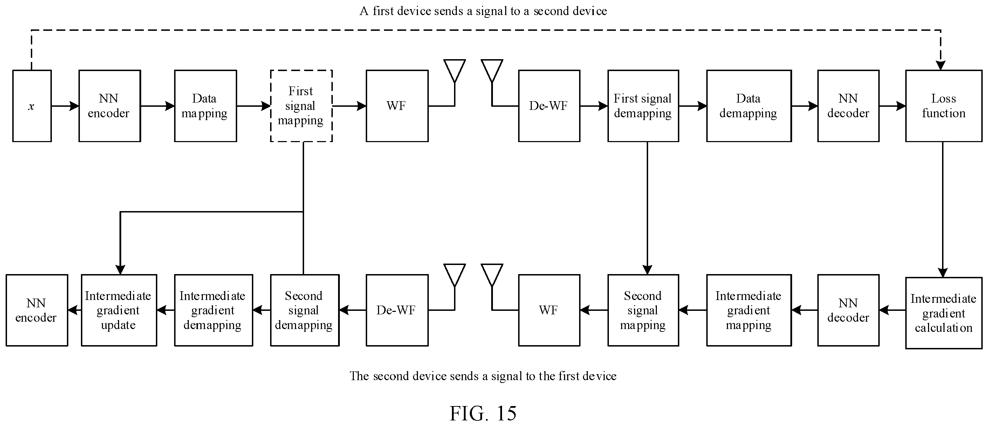

FIG. 15 is a diagram of signal processing to which embodiments of this application are applicable. For ease of description, sending a signal by a first device to a second device is referred to as a downlink phase, and sending a signal by the second device to the first device is referred to as an uplink phase. In the following embodiments, unless otherwise specified, z indicates a sent signal, $r$ indicates a received signal, $\tilde{x}$ indicates an output of a neural network model, namely, an output data signal, $A1$ indicates a first signal, $A2$ indicates a second signal, $A3$ indicates a third signal, and $A4$ indicates a fourth signal. In addition, in the following embodiments, unless otherwise specified, k, n, and $l$ indicate sequence numbers (or sequence numbers of symbols in a signal). For example, n in z(n) indicate a sequence number of the sent signal, k in $A1(k)$ indicate a sequence number of the first signal $A1$, and $l$ in $\tilde{x}(l)$ indicates a sequence number of the output of the neural network model, namely, a sequence number of the data signal.

As shown in FIG. 15, the first device may perform the following steps in the downlink phase.

(1) Obtain training data x. Optionally, the first device further determines a pattern of the first signal and the first signal.
(2) Input the training data $x$ to an NN encoder. It is assumed that an output is $x'$, and $x'=nn_e(x)$.
(3) Data mapping (data mapping) and first signal mapping: Specifically, the output x' in step (2) is mapped to an air interface resource. Table 1 is used as an example. If a type of the first signal and a type of the second signal belong to one of the type A, the type B, or the type D, the sent signal z(n) is: z(n)=$A1$(k) or z(n)=$\tilde{x}(l)$ ; or if the type of the first signal and the type of the second signal belong to the type B, z(n)=$\tilde{x}(n)$.
(5) Waveform (waveform, WF) sending: Specifically, the data signal mapped in step (3) and the first signal in step (4) are modulated, mapped into a waveform, and sent.
The second device may perform the following steps in the downlink phase.
(6) Air interface signals (for example, the third signal $A3$ (namely, the first signal obtained after passing through a channel) and the data signal) pass through a de-waveform (De-WF) module.
(7) Third signal and data demapping (demap): Specifically, for demapping of the third signal, $A3$=y(n); and for demapping of the data signal, r(l)=y(n). Herein, $r$ indicates the received data, and y indicates downlink data sent by the first device.
(8) The data passes through an NN decoder. For example, $r'=nn_d(r)$.
(10) Calculate a loss function.
The second device may perform the following steps in the uplink phase.
(11) Calculate an intermediate gradient. Specifically, the second device determines the intermediate gradient based on the loss function obtained through calculation in step (10).
(12) Determine a gradient of the NN decoder based on the intermediate gradient.
(13) Intermediate gradient (namely, the first intermediate gradient described above) and fourth signal mapping: Specifically, the intermediate gradient and the fourth signal are mapped to an air interface resource. For example, if the signal z(n) sent by the second device is the fourth signal, z(n)=$f(A4$(k)); or if the signal z(n) sent by the second device is the intermediate gradient, $z(\mathrm{n})= g\left(\dfrac{\partial L}{\partial Y}\right)$ . Herein, g indicates a function, L indicates the loss function, and Y indicates an input of a neural network model (for example, a neural network model deployed on the second device).
(14) Waveform sending
The first device may perform the following steps in the uplink phase.
(15) Air interface signals (for example, the second signal (namely, the fourth signal obtained after passing through a channel) and the intermediate gradient) pass through a de-waveform module.
(16) Second signal and intermediate gradient demapping (demap): Specifically, for demapping of the second signal, $A2$(k)=f(y(n)); and for demapping of the intermediate gradient, r(l)=g(y(n)). Herein, f and g indicate functions, and y indicates uplink data sent by the second device.
(17) Update the intermediate gradient. Specifically, the received intermediate gradient is updated based on the first signal and the second signal. For example, an intermediate gradient correction value is e=E($A1$, $A2$). Herein, E indicates a function, that is, a function used to calculate a channel reciprocity error. For example, $E(A1, A2)=A2A1$.
(18) Calculate an update gradient of the NN encoder. Specifically, a parameter of the NN encoder is updated based on an updated intermediate gradient, and the gradient of the NN encoder is calculated.

It may be understood that the foregoing steps are merely examples for description. This is not limited.

It may be understood that some optional features in embodiments of this application may be independent of other features in some scenarios, or may be combined with other features in some scenarios. This is not limited.

It may be further understood that, in some of the foregoing embodiments, information sending is mentioned for a plurality of times. For example, A sends information to B. That A sends information to B may include that A directly sends information to B, or may include that A sends information to B by using another device or network element. This is not limited.

It may be further understood that the solutions in embodiments of this application may be appropriately combined for use, and explanations or descriptions of the terms in the embodiments may be mutually referenced or explained in embodiments. This is not limited.

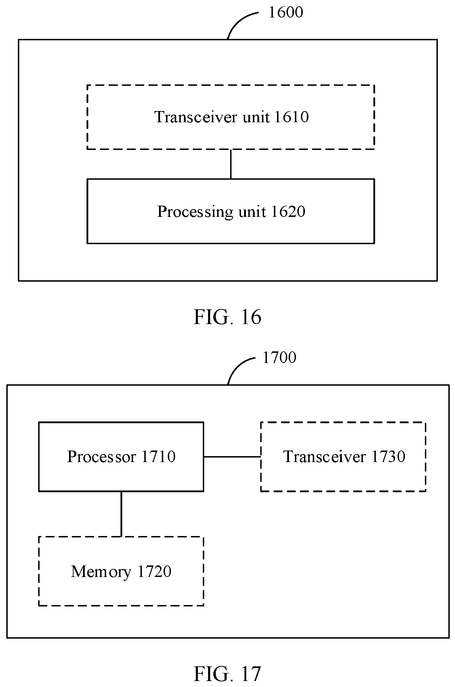

The methods provided in embodiments of this application are described above in detail with reference to FIG. 4 to FIG. 15. Apparatuses provided in embodiments of this application are described below in detail with reference to FIG. 16 to FIG. 18. It should be understood that descriptions of apparatus embodiments correspond to descriptions of method embodiments. Therefore, for content that is not described in detail, refer to the foregoing method embodiments. For brevity, details are not described herein again.

FIG. 16 is a diagram of a communication apparatus 1600 according to an embodiment of this application. The apparatus 1600 includes a processing unit 1620. The processing unit 1620 may be configured to perform processing, for example, update an intermediate gradient. Optionally, the apparatus 1600 further includes a transceiver unit 1610. The transceiver unit 1610 may be configured to implement a corresponding communication function. The transceiver unit 1610 may also be referred to as a communication interface or a communication unit.

Optionally, the apparatus 1600 may further include a storage unit. The storage unit may be configured to store instructions and/or data. The processing unit 1620 may read the instructions and/or the data in the storage unit, so that the apparatus implements the foregoing method embodiments.

In a first possible design, the apparatus 1600 may be the communication apparatus (for example, the first device in FIG. 4, FIG. 5, FIG. 7, or FIG. 9) in the foregoing embodiments. The apparatus 1600 may implement steps or procedures performed by the communication apparatus in the foregoing method embodiments. The transceiver unit 1610 may be configured to perform a receiving/sending-related operation (for example, an operation of sending and/or receiving data or a message) of the communication apparatus in the foregoing method embodiments. The processing unit 1620 may be configured to perform a processing-related operation of the communication apparatus in the foregoing method embodiments, or an operation other than receiving and sending (for example, an operation other than sending and/or receiving data or a message).

In a possible implementation, the transceiver unit 1610 is configured to send a first signal; the transceiver unit 1610 is further configured to receive a first intermediate gradient and a second signal, where the second signal is correlated with the first signal; and the processing unit 1620 is configured to update the first intermediate gradient based on the first signal and the second signal, to obtain a second intermediate gradient, where the second intermediate gradient is used to update a neural network parameter.

Optionally, the first signal is any one of the following: a user-defined sequence, a reference signal, or a data signal.

Optionally, the first signal is the user-defined sequence, and the first intermediate gradient is determined based on a data signal; or the first signal is the reference signal, and the first intermediate gradient is determined based on a data signal and the reference signal; or the first signal is the data signal, and the first intermediate gradient is determined based on the first signal.

Optionally, the processing unit 1620 is configured to: determine a channel reciprocity error value based on the first signal and the second signal; and update the first intermediate gradient based on the channel reciprocity error value.

Optionally, the second signal and the first signal satisfy:

$$A2 = f\left(A1\right) \quad \text{or} \quad A2 = f\left(A1^{*}\right),$$

where

$A1$ indicates the first signal, $A2$ indicates the second signal, and $A1^{*}$ indicates a conjugate operation on $A1$.

Optionally, the second signal and the first signal satisfy any one of the following:

$$A2 = \alpha A1, \quad A2 = \alpha A1^{*}, \quad A2 = \frac{1}{|A1|} A1, \quad A2 = \frac{1}{|A1|} A1^{*}, \quad A2 = \frac{1}{\|A1\|_{2}} A1, \quad \text{or} \quad A2 = \frac{1}{\|A1\|_{2}} A1^{*},$$

where

$A1$ indicates the first signal, $A2$ indicates the second signal, $A1^{*}$ indicates the conjugate operation on $A1$, $|A1|$ indicates independent normalization processing on power of each symbol in $A1$, $\|A1\|_{2}$ indicates normalization processing on power of a part or all of symbols in $A1$, and $\alpha$ is a constant.

Optionally, the transceiver unit 1610 is further configured to send first indication information, where the first indication information indicates a type of the first signal and/or a type of the second signal.

Optionally, the transceiver unit 1610 is further configured to receive second indication information, where the second indication information indicates a pattern of the second signal.

Optionally, the pattern of the second signal includes at least one of the following: a mask of the second signal, a resource occupied by the second signal, and a sequence number of the second signal.

In a second possible design, the apparatus 1600 may be the communication apparatus (for example, the first device in FIG. 11 or FIG. 12) in the foregoing embodiments. The apparatus 1600 may implement steps or procedures performed by the communication apparatus in the foregoing method embodiments. The transceiver unit 1610 may be configured to perform a receiving/sending-related operation (for example, an operation of sending and/or receiving data or a message) of the communication apparatus in the foregoing method embodiments. The processing unit 1620 may be configured to perform a processing-related operation of the communication apparatus in the foregoing method embodiments, or an operation other than receiving and sending (for example, an operation other than sending and/or receiving data or a message).

In a possible implementation, the transceiver unit 1610 is configured to send a first reference signal; the transceiver unit 1610 is further configured to receive a first intermediate gradient and a second reference signal, where the first intermediate gradient is determined based on the first reference signal; and the processing unit 1620 is configured to: perform channel estimation based on the second reference signal, and update the first intermediate gradient based on a channel estimation result, to obtain a second intermediate gradient, where the second intermediate gradient is used to update a neural network parameter.

Optionally, the transceiver unit 1610 is further configured to send first indication information, where the first indication information indicates a type of the first reference signal and/or a type of the second reference signal.

Optionally, the transceiver unit 1610 is further configured to receive second indication information, where the second indication information indicates a pattern of the second reference signal.

Optionally, the pattern of the second reference signal includes at least one of the following: a mask of the second reference signal, a resource occupied by the second reference signal, and a sequence number of the second reference signal.

In a third possible design, the apparatus 1600 may be the communication apparatus (for example, the second device in FIG. 4, FIG. 5, FIG. 7, or FIG. 9) in the foregoing embodiments. The apparatus 1600 may implement steps or procedures performed by the communication apparatus in the foregoing method embodiments. The transceiver unit 1610 may be configured to perform a receiving/sending-related operation (for example, an operation of sending and/or receiving data or a message) of the communication apparatus in the foregoing method embodiments. The processing unit 1620 may be configured to perform a processing-related operation of the communication apparatus in the foregoing method embodiments, or an operation other than receiving and sending (for example, an operation other than sending and/or receiving data or a message).

In a possible implementation, the transceiver unit 1610 is configured to receive a first signal; and the transceiver unit 1610 is further configured to send a first intermediate gradient and a second signal, where the second signal is correlated with the first signal, the second signal is used to update the first intermediate gradient, and the first intermediate gradient is used to update a neural network parameter.

Optionally, the first signal is any one of the following: a user-defined sequence, a reference signal, or a data signal.

Optionally, the first signal is the user-defined sequence, and the first intermediate gradient is determined based on a data signal; or the first signal is the reference signal, and the first intermediate gradient is determined based on a data signal and the reference signal; or the first signal is the data signal, and the first intermediate gradient is determined based on the first signal.

Optionally, the second signal and the first signal satisfy:

$$A2 = f\left(A1\right) \ \text{ or } \ A2 = f\left(A1^{*}\right),$$

where

$A1$ indicates the first signal, $A2$ indicates the second signal, and $A1^{*}$ indicates a conjugate operation on $A1$.

Optionally, the second signal and the first signal satisfy any one of the following:

$$A2 = \alpha A1, \ \ A2 = \alpha A1^{*}, \ \ A2 = \frac{1}{|A1|}A1, \ \ A2 = \frac{1}{|A1|}A1^{*}, \ \ A2 = \frac{1}{\|A1\|_{2}}A1, \ \text{or} \ A2 = \frac{1}{\|A1\|_{2}}A1^{*},$$

where

$A1$ indicates the first signal, $A2$ indicates the second signal, $A1^{*}$ indicates the conjugate operation on $A1$, $|A1|$ indicates independent normalization processing on power of each symbol in $A1$, $\|A1\|_{2}$ indicates normalization processing on power of a part or all of symbols in $A1$, and $\alpha$ is a constant.

Optionally, the transceiver unit 1610 is further configured to receive first indication information, where the first indication information indicates a type of the first signal and/or a type of the second signal.

Optionally, the transceiver unit 1610 is further configured to send second indication information, where the second indication information indicates a pattern of the second signal.

Optionally, the pattern of the second signal includes at least one of the following: a mask of the second signal, a resource occupied by the second signal, and a sequence number of the second signal.

In a fourth possible design, the apparatus 1600 may be the communication apparatus (for example, the second device in FIG. 11 or FIG. 12) in the foregoing embodiments. The apparatus 1600 may implement steps or procedures performed by the communication apparatus in the foregoing method embodiments. The transceiver unit 1610 may be configured to perform a receiving/sending-related operation (for example, an operation of sending and/or receiving data or a message) of the communication apparatus in the foregoing method embodiments. The processing unit 1620 may be configured to perform a processing-related operation of the communication apparatus in the foregoing method embodiments, or an operation other than receiving and sending (for example, an operation other than sending and/or receiving data or a message).

In a possible implementation, the transceiver unit 1610 is configured to receive a first reference signal; the processing unit 1620 is configured to: perform channel estimation based on the first reference signal, and determine a first intermediate gradient based on a channel estimation result; and the transceiver unit 1610 is further configured to send the first intermediate gradient and a second reference signal, where the second reference signal is used to update the first intermediate gradient, and the first intermediate gradient is used to update a neural network parameter.

Optionally, the transceiver unit 1610 is further configured to receive first indication information, where the first indication information indicates a type of the first reference signal and/or a type of the second reference signal.

Optionally, the transceiver unit 1610 is further configured to send second indication information, where the second indication information indicates a pattern of the second reference signal.

Optionally, the pattern of the second reference signal includes at least one of the following: a mask of the second reference signal, a resource occupied by the second reference signal, and a sequence number of the second reference signal.

It should be understood that a specific process in which the units perform the foregoing corresponding steps is described in detail in the foregoing method embodiments. For brevity, details are not described herein.

It should be further understood that the apparatus 1600 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1600 may be specifically the communication apparatus in the foregoing embodiments, and may be configured to perform procedures and/or steps corresponding to the communication apparatus in the foregoing method embodiments. To avoid repetition, details are not described herein again.

The apparatus 1600 in the foregoing solutions has a function of implementing corresponding steps performed by the communication apparatus in the foregoing methods. The function may be implemented by hardware, or may be implemented by hardware executing corresponding software. The hardware or software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver). Another unit, for example, a processing unit, may be replaced with a processor to separately perform receiving and sending operations and a related processing operation in each method embodiment.

In addition, the transceiver unit 1610 may alternatively be a transceiver circuit (for example, may include a receiving circuit and a sending circuit), and the processing unit may be a processing circuit.

It should be noted that the apparatus in FIG. 16 may be the communication device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 17 is a diagram of another communication apparatus 1700 according to an embodiment of this application. The apparatus 1700 includes a processor 1710. The processor 1710 is coupled to a memory 1720, the memory 1720 is configured to store a computer program or instructions and/or data, and the processor 1710 is configured to execute the computer program or the instructions stored in the memory 1720, or read the data stored in the memory 1720, to perform the method in the foregoing method embodiments.

Optionally, there are one or more processors 1710.

Optionally, there are one or more memories 1720.

Optionally, the memory 1720 may be integrated with the processor 1710, or the memory 1720 and the processor 1710 are separately disposed.

Optionally, as shown in FIG. 17, the apparatus 1700 further includes a transceiver 1730. The transceiver 1730 is configured to receive and/or send a signal. For example, the processor 1710 is configured to control the transceiver 1730 to receive and/or send the signal.

For example, the processor 1710 may have a function of the processing unit 1620 shown in FIG. 16, the memory 1720 may have a function of the storage unit, and the transceiver 1730 may have a function of the transceiver unit 1610 shown in FIG. 16.

In a solution, the apparatus 1700 is configured to implement operations performed by the communication apparatus in the foregoing method embodiments.

For example, the processor 1710 is configured to execute the computer program or the instructions stored in the memory 1720, to implement the related operations of the communication apparatus in the foregoing method embodiments.

It should be understood that, the processor mentioned in this embodiment of this application may be a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any memory of another proper type.

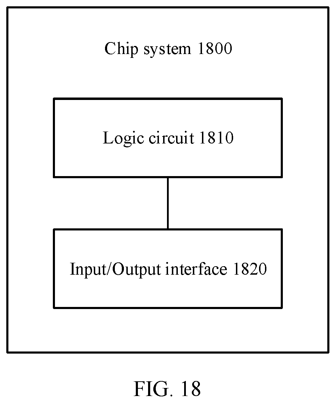

FIG. 18 is a diagram of a chip system 1800 according to an embodiment of this application. The chip system 1800 (or may also be referred to as a processing system) includes a logic circuit 1810 and an input/output interface (input/output interface) 1820.

The logic circuit 1810 may be a processing circuit in the chip system 1800. The logic circuit 1810 may be coupled and connected to a storage unit, and invoke instructions in the storage unit, so that the chip system 1800 can implement the methods and functions in embodiments of this application. The input/output interface 1820 may be an input/output circuit in the chip system 1800, and outputs information processed by the chip system 1800, or inputs to-be-processed data or signaling information to the chip system 1800 for processing.

In a solution, the chip system 1800 is configured to implement operations performed by the communication apparatus (for example, the first device or the second device) in the foregoing method embodiments.

For example, the logic circuit 1810 is configured to implement processing-related operations performed by the communication apparatus (for example, the first device or the second device) in the foregoing method embodiments, and the input/output interface 1820 is configured to implement sending and/or receiving-related operations performed by the communication apparatus (for example, the first device or the second device) in the foregoing method embodiments.

An embodiment of this application further provides a computer-readable storage medium. The computer-readable storage medium stores computer instructions used to implement the method performed by the communication apparatus (for example, the first device or the second device) in the foregoing method embodiments.

For example, when a computer program is executed by a computer, the computer is enabled to implement the method performed by the communication apparatus (for example, the first device or the second device) in the foregoing method embodiments.

An embodiment of this application further provides a computer program product including instructions. When the instructions are executed by a computer, the computer is enabled to implement the method performed by the communication apparatus (for example, the first device or the second device) in the foregoing method embodiments.

An embodiment of this application further provides a communication system. The communication system includes the first device and/or the second device in the foregoing embodiments. For example, the system includes the first device and the second device in FIG. 4, FIG. 5, FIG. 7, or FIG. 9. For another example, the system includes the first device and the second device in FIG. 11 or FIG. 12.

For explanations and beneficial effect of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network training method, comprising:

   sending a first signal;
   receiving a first intermediate gradient and a second signal, wherein the second signal is correlated with the first signal; and
   updating the first intermediate gradient based on the first signal and the second signal, to obtain a second intermediate gradient, wherein the second intermediate gradient is used to update a neural network parameter.

2. The method according to claim 1, wherein the first signal is any one of the following: a user-defined sequence, a reference signal, or a data signal.

3. The method according to claim 2, wherein

   the first signal is the user-defined sequence, and the first intermediate gradient is determined based on a data signal; or
   the first signal is the reference signal, and the first intermediate gradient is determined based on a data signal and the reference signal; or
   the first signal is the data signal, and the first intermediate gradient is determined based on the first signal.

4. The method according to any one of claims 1 to 3, wherein updating the first intermediate gradient based on the first signal and the second signal comprises:

   determining a channel reciprocity error value based on the first signal and the second signal; and

updating the first intermediate gradient based on the channel reciprocity error value.

5. The method according to any one of claims 1 to 4, wherein the second signal and the first signal satisfy:

$$A2 = f\left(A1\right) \ \ \text{or} \ \ A2 = f\left(A1^{*}\right),$$

wherein
$A1$ indicates the first signal, $A2$ indicates the second signal, and $A1^{*}$ indicates a conjugate operation on $A1$.

6. The method according to any one of claims 1 to 5, wherein the second signal and the first signal satisfy any one of the following:

$$A2 = \alpha A1, \ \ A2 = \alpha A1^{*}, \ \ A2 = \frac{1}{|A1|}A1, \ \ A2 = \frac{1}{|A1|}A1^{*}, \ \ A2 = \frac{1}{\|A1\|_{2}}A1, \ \text{or} \ \ A2 = \frac{1}{\|A1\|_{2}}A1^{*},$$

wherein
$A1$ indicates the first signal, $A2$ indicates the second signal, $A1^{*}$ indicates the conjugate operation on $A1$, $|A1|$ indicates independent normalization processing on power of each symbol in $A1$, $\|A1\|_{2}$ indicates normalization processing on power of a part or all of symbols in $A1$, and $\alpha$ is a constant.

7. The method according to any one of claims 1 to 6, wherein the method further comprises:
sending first indication information, wherein the first indication information indicates a type of the first signal and/or a type of the second signal.

8. The method according to any one of claims 1 to 7, wherein before receiving the first intermediate gradient and the second signal, the method further comprises:
receiving second indication information, wherein the second indication information indicates a pattern of the second signal.

9. The method according to claim 8, wherein the pattern of the second signal comprises at least one of the following:
a mask of the second signal, a resource occupied by the second signal, and a sequence number of the second signal.

10. A neural network training method, comprising:

receiving a first signal; and
sending a first intermediate gradient and a second signal, wherein the second signal is correlated with the first signal, the second signal is used to update the first intermediate gradient, and the first intermediate gradient is used to update a neural network parameter.

11. The method according to claim 10, wherein the first signal is any one of the following: a user-defined sequence, a reference signal, or a data signal.

12. The method according to claim 11, wherein

the first signal is the user-defined sequence, and the first intermediate gradient is determined based on a data signal; or
the first signal is the reference signal, and the first intermediate gradient is determined based on a data signal and the reference signal; or
the first signal is the data signal, and the first intermediate gradient is determined based on the first signal.

13. The method according to any one of claims 10 to 12, wherein the second signal and the first signal satisfy:

$$A2 = f\left(A1\right) \ \ \text{or} \ \ A2 = f\left(A1^{*}\right),$$

wherein

*A*1 indicates the first signal, *A*2 indicates the second signal, and *A*1* indicates a conjugate operation on *A*1.

14. The method according to any one of claims 10 to 13, wherein the second signal and the first signal satisfy any one of the following:

$$A2 = \alpha A1, \quad A2 = \alpha A1^{*}, \quad A2 = \frac{1}{|A1|}A1, \quad A2 = \frac{1}{|A1|}A1^{*}, \quad A2 = \frac{1}{\|A1\|_{2}}A1, \text{ or } \quad A2 = \frac{1}{\|A1\|_{2}}A1^{*},$$

wherein
*A*1 indicates the first signal, *A*2 indicates the second signal, *A*1* indicates the conjugate operation on *A*1, |*A*1| indicates independent normalization processing on power of each symbol in *A*1, $\|A1\|_{2}$ indicates normalization processing on power of a part or all of symbols in *A*1, and $\alpha$ is a constant.

15. The method according to any one of claims 10 to 14, wherein the method further comprises:
receiving first indication information, wherein the first indication information indicates a type of the first signal and/or a type of the second signal.

16. The method according to any one of claims 10 to 15, wherein the method further comprises:
sending second indication information, wherein the second indication information indicates a pattern of the second signal.

17. The method according to claim 16, wherein the pattern of the second signal comprises at least one of the following:
a mask of the second signal, a resource occupied by the second signal, and a sequence number of the second signal.

18. A neural network training method, comprising:

sending a first reference signal;
receiving a first intermediate gradient and a second reference signal, wherein the first intermediate gradient is determined based on the first reference signal; and
performing channel estimation based on the second reference signal, and updating the first intermediate gradient based on a channel estimation result, to obtain a second intermediate gradient, wherein the second intermediate gradient is used to update a neural network parameter.

19. The method according to claim 18, wherein the method further comprises:
sending first indication information, wherein the first indication information indicates a type of the first reference signal and/or a type of the second reference signal.

20. The method according to claim 18 or 19, wherein before receiving the first intermediate gradient and the second reference signal, the method further comprises:
receiving second indication information, wherein the second indication information indicates a pattern of the second reference signal.

21. The method according to claim 20, wherein the pattern of the second reference signal comprises at least one of the following:
a mask of the second reference signal, a resource occupied by the second reference signal, and a sequence number of the second reference signal.

22. A neural network training method, comprising:

receiving a first reference signal;
performing channel estimation based on the first reference signal, and determining a first intermediate gradient based on a channel estimation result; and
sending the first intermediate gradient and a second reference signal, wherein the second reference signal is used to update the first intermediate gradient, and the first intermediate gradient is used to update a neural network parameter.

23. The method according to claim 22, wherein the method further comprises:

receiving first indication information, wherein the first indication information indicates a type of the first reference signal and/or a type of the second reference signal.

24. The method according to claim 22 or 23, wherein the method further comprises:
sending second indication information, wherein the second indication information indicates a pattern of the second reference signal.

25. The method according to claim 24, wherein the pattern of the second reference signal comprises at least one of the following:
a mask of the second reference signal, a resource occupied by the second reference signal, and a sequence number of the second reference signal.

26. A communication apparatus, comprising a unit configured to perform the method according to any one of claims 1 to 9, a unit configured to perform the method according to any one of claims 10 to 17, a unit configured to perform the method according to any one of claims 18 to 21, or a unit configured to perform the method according to any one of claims 22 to 25.

27. A communication apparatus, comprising a processor, wherein the processor is configured to execute a computer program or instructions stored in a memory, to enable the communication apparatus to perform the method according to any one of claims 1 to 9, to enable the communication apparatus to perform the method according to any one of claims 10 to 17, to enable the communication apparatus to perform the method according to any one of claims 18 to 21, or to enable the communication apparatus to perform the method according to any one of claims 22 to 25.

28. The apparatus according to claim 27, wherein the apparatus further comprises the memory and/or a communication interface, and the communication interface is coupled to the processor; and
the communication interface is configured to input and/or output information.

29. The apparatus according to claim 27 or 28, wherein the apparatus is any one of the following: a communications device, a chip, or a chip system.

30. A computer-readable storage medium, wherein the computer-readable storage medium stores a computer program or instructions, and when the computer program or the instructions are run on a communication apparatus, the communication apparatus is enabled to perform the method according to any one of claims 1 to 9, the communication apparatus is enabled to perform the method according to any one of claims 10 to 17, the communication apparatus is enabled to perform the method according to any one of claims 18 to 21, or the communication apparatus is enabled to perform the method according to any one of claims 22 to 25.

31. A computer program product, wherein the computer program product comprises a computer program or instructions used to perform the method according to any one of claims 1 to 9, or the computer program product comprises a computer program or instructions used to perform the method according to any one of claims 10 to 17, or the computer program product comprises a computer program or instructions used to perform the method according to any one of claims 18 to 21, or the computer program product comprises a computer program or instructions used to perform the method according to any one of claims 22 to 25.

FIG. 1

Non-real-time RIC

Access network node

Near-real-time RIC

CU

CU-CP

CU-UP

DU

RU

Terminal

FIG. 2

Neuron

$$y = f\left(\sum_{i=0}^{n} w_i * x_i + b\right)$$

$w_0 * x_0$

$w_1 * x_1$

$w_n * x_n$

$y$

FIG. 3

400

| First device | | Second device |

401: First signal →

402: First intermediate gradient and second signal, where the second signal is correlated with the first signal
←

403: Update the first intermediate gradient based on the first signal and the second signal, to obtain a second intermediate gradient, where the second intermediate gradient is used to update a neural network parameter

FIG. 4

500

| First device | | Second device |
|---|---|---|

501: Configuration information

502: Infer a model #1, to obtain an output of the model #1

503: First signal and output of the model #1

504: Infer a model #2, to obtain an output of the model #2, and calculate a loss function

505: Determine a first intermediate gradient based on the loss function

506: First intermediate gradient and fourth signal

507: Update the first intermediate gradient based on the first signal and the received fourth signal, to obtain a second intermediate gradient

508: Update a parameter of the model #1 based on the second intermediate gradient

FIG. 5

Forward inference

First device ⇨

Second device ⇨

Backward gradient

First device ⇦

Second device ⇦

Data signal ⊠
Gradient signal ▧
First signal ▨
Fourth signal ◩

FIG. 6

700

| First device | | Second device |
|---|---|---|

701: Configuration information

702: Infer a model #1, to obtain
an output of the model #1

703: Output of the model #1

704: Infer a model #2, to obtain
an output of the model #2, and
calculate a loss function

705: Determine a first
intermediate gradient based on
the loss function

706: Pattern of a fourth signal

707: First intermediate
gradient and fourth signal

708: Update the first
intermediate gradient based on a
first signal and the received
fourth signal, to obtain a second
intermediate gradient

709: Update a parameter of the
model #1 based on the second
intermediate gradient

FIG. 7

Forward inference

First device ⇨ ⇨ Second device

Backward gradient

First device ⇦ ⇦ Second device

Data signal ⊠

Gradient signal ▦

Fourth signal ◩

FIG. 8

900

| First device | | Second device |

901: Configuration information →

902: Infer a model #1, to obtain an output of the model #1

903: Output of the model #1 and reference signal →

904: Infer a model #2, to obtain an output of the model #2, and calculate a loss function

905: Determine a first intermediate gradient based on the loss function

906: Perform channel estimation based on the received reference signal, and update the first intermediate gradient based on a channel estimation result

907: Pattern of a fourth signal ←

908: First intermediate gradient and fourth signal ←

909: Update the first intermediate gradient based on the reference signal and the received fourth signal, to obtain a second intermediate gradient

910: Update a parameter of the model #1 based on the second intermediate gradient

FIG. 9

Forward inference

First device ⇨ ⇨ Second device

Backward gradient

First device ⇦ ⇦ Second device

Data signal ⊠
Gradient signal ▨
First signal ▧
Fourth signal ▨

FIG. 10

1100

```
┌─────────────────────────┐          ┌─────────────────────────┐
│       First device      │          │      Second device      │
└─────────────────────────┘          └─────────────────────────┘
```

1101: First reference signal

1102: First intermediate gradient and
second reference signal, where the first
intermediate gradient is determined based
on the first reference signal

1103: Perform channel estimation based on
the second reference signal, and update the
first intermediate gradient based on a
channel estimation result, to obtain a
second intermediate gradient, where the
second intermediate gradient is used to
update a neural network parameter

FIG. 11

1200

```
┌─────────────────────────┐          ┌─────────────────────────┐
│      First device       │          │     Second device       │
└─────────────────────────┘          └─────────────────────────┘
```

1201: Configuration information

1202: Infer a model #1, to obtain an output of the model #1

1203: Output of the model #1 and first reference signal

1204: Infer a model #2, to obtain an output of the model #2, and calculate a loss function

1205: Determine a first intermediate gradient based on the loss function

1206: Perform channel estimation based on the received first reference signal, and update the first intermediate gradient based on a channel estimation result

1207: First intermediate gradient and fourth reference signal

1208: Perform channel estimation based on the received fourth reference signal, and update the first intermediate gradient based on a channel estimation result, to obtain a second intermediate gradient

1209: Update a parameter of the model #1 based on the second intermediate gradient

FIG. 12

Forward inference

First device ⇨ Second device ⇨

Backward gradient

First device ⇦ Second device ⇦

Data signal ⊠
Gradient signal ⊡
First reference signal ⧄
Fourth reference signal ⧅

FIG. 13

FIG. 14

FIG. 15

1600

Transceiver unit 1610

Processing unit 1620

FIG. 16

1700

Processor 1710

Transceiver 1730

Memory 1720

FIG. 17

Chip system 1800

Logic circuit 1810

Input/Output interface 1820

FIG. 18

## INTERNATIONAL SEARCH REPORT

| International application No. |
| --- |
| **PCT/CN2023/114303** |

**A. CLASSIFICATION OF SUBJECT MATTER**

G06N 3/08(2023.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 信道估计, 信道互易性, 参考信号, 中间梯度, 参数, 更新, 模型, 掩码, 序号, 指示信息, 图样, channel estimation, channel reciprocity, reference signal, intermediate gradient, parameter, update, mask, indicator information, pattern

**C. DOCUMENTS CONSIDERED TO BE RELEVANT**

| Category* | Citation of document, with indication, where appropriate, of the relevant passages | Relevant to claim No. |
| --- | --- | --- |
| Y | CN 116458103 A (HUAWEI TECHNOLOGIES CO., LTD.) 18 July 2023 (2023-07-18) description, paragraphs 182-360, and figures 10-11 | 1-31 |
| Y | CN 115222038 A (HUAWEI TECHNOLOGIES CO., LTD.) 21 October 2022 (2022-10-21) description, paragraph 198 | 1-31 |
| Y | CN 112134661 A (HUAWEI TECHNOLOGIES CO., LTD.) 25 December 2020 (2020-12-25) description, paragraphs 173-380 | 7-9, 15-17, 19-21, 23-25 |
| A | CN 109150774 A (RUIJIE NETWORKS CO., LTD.) 04 January 2019 (2019-01-04) entire document | 1-31 |
| A | CN 115293318 A (HUAWEI TECHNOLOGIES CO., LTD.) 04 November 2022 (2022-11-04) entire document | 1-31 |
| A | WO 2022022610 A1 (HUAWEI TECHNOLOGIES CO., LTD.) 03 February 2022 (2022-02-03) entire document | 1-31 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 April 2024** | **26 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/114303**

| Patent document cited in search report | | | Publication date (day/month/year) | Patent family member(s) | | | Publication date (day/month/year) |
|---|---|---|---|---|---|---|---|
| CN | 116458103 | A | 18 July 2023 | WO | 2022141397 | A1 | 07 July 2022 |
| | | | | EP | 4262121 | A1 | 18 October 2023 |
| | | | | US | 2023342593 | A1 | 26 October 2023 |
| CN | 115222038 | A | 21 October 2022 | WO | 2022218234 | A1 | 20 October 2022 |
| | | | | US | 2024049188 | A1 | 08 February 2024 |
| | | | | EP | 4322065 | A1 | 14 February 2024 |
| CN | 112134661 | A | 25 December 2020 | WO | 2020259406 | A1 | 30 December 2020 |
| | | | | EP | 3979541 | A1 | 06 April 2022 |
| | | | | US | 2022116176 | A1 | 14 April 2022 |
| CN | 109150774 | A | 04 January 2019 | None | | | |
| CN | 115293318 | A | 04 November 2022 | WO | 2022218386 | A1 | 20 October 2022 |
| | | | | IN | 202347071539 | A | 24 November 2023 |
| | | | | EP | 4318310 | A1 | 07 February 2024 |
| | | | | US | 2024054324 | A1 | 15 February 2024 |
| | | | | JP | 2024514651 | W | 02 April 2024 |
| WO | 2022022610 | A1 | 03 February 2022 | CN | 114071686 | A | 18 February 2022 |

Form PCT/ISA/210 (patent family annex) (July 2022)